# EUROPEAN PATENT SPECIFICATION

(11) **EP 2 110 660 B1**
(45) Date of publication and mention of the grant of the patent: **04.04.2012**
(21) Application number: 08154460.3
(22) Date of filing: 14.04.2008
(51) Int. Cl.: G01N 27/38

(54) **Sensor device, system and method for monitoring an anaerobic digestion process**
Sensorvorrichtung, System und Verfahren zur Kontrolle eines anaeroben Verdauungsprozesses
Dispositif de capteur, système et procédé de surveillance d'un processus de digestion anaérobique

(43) Date of publication of application: 21.10.2009
(73) Proprietor: WIKA Alexander Wiegand SE & Co. KG, 63911 Klingenberg/Main (DE)
(72) Inventor: Louthander, Dan, 582 46 Linköping (SE); Bachinger, Thomas, 169 51 Solna (SE); Gawronski, Michael, 63808 Haribach (DE); Martensson, Per, 582 17 Linköping (SE)
(74) Representative: VALEA AB

(56) References cited:
- WO-A-99/13325
- WO-A-99/57551

## Description

### TECHNICAL FIELD

The present invention relates to a sensor device for monitoring an anaerobic digestion process in an electrically conductive liquid comprising organic material, which sensor device comprises an electrochemical probe and is based on pulse voltammetry. In addition, the present invention relates to a system for monitoring an anaerobic digestion process in an electrically conductive liquid comprising organic material, which system comprises the sensor device according to the invention. Furthermore, the present invention relates to a method for monitoring an anaerobic digestion process in an electrically conductive liquid comprising organic material.

### BACKGROUND OF THE INVENTION

Anaerobic digestion processes are processes in which microorganisms such as, for example, bacteria, break down (*i.e.*, digest) a substrate in the form of organic material. The digestion is performed in the absence of oxygen and results in a product and digested sludge. For example, anaerobic digestion processes of organic material may be utilized in order to produce energy carriers or reduce volumes of waste. Recently, anaerobic digestion processes for such aims have received a lot of attention because of the multiple environmental benefits and resource efficiency associated therewith.

One example of a product that may be produced by means of an anaerobic digestion process of organic material is biogas. The produced biogas may be used for, for example, heating, electricity generation, as vehicle fuel, or it may be distributed via a natural-gas grid. In general, the implementation of biogas systems often leads to significant improvements concerning resource efficiency and environmental impacts compared to traditional waste handling (Börjesson and Berglund, 2007). Another interesting product of anaerobic digestion processes is hydrogen because of its very high calorific value. Indirect energy or environmental impacts may also be of great importance, *e.g.*, the (partial) replacement of chemical fertilizers by the digested substrate.

A wide variety of organic materials may be used as substrates in anaerobic digestion processes, *e.g.*, farm products (liquid manure, poultry excrements, grain, maize, green rye, rape, sunflowers, fodder beets, sugar beets, etc.) or organic waste (from breweries, food markets, distilleries, slaughter houses, waste water treatment plants, etc.). The organic material is usually processed under dry conditions (> 25% total solids), semi-dry conditions (16 - 22% total solids) or wet conditions (3 - 8% total solids).

Anaerobic digestion plants are usually designed for continuous operation in a one-stage process where organic matter is digested in a closed reactor to produce, *e.g.*, biogas and at the same time reduce the amount of organic material. Variations of process types are in use today where, *e.g.*, two-stage and two-phase digestion processes utilize two reactors with different retention times. In addition, there are many different types of reactors known today for utilization in anaerobic digestion processes, *e.g.*, anaerobic filter beds, continuously stirred tank reactors and plug-flow reactors. A typical plant incorporates a mixing tank for blending ground organic matter with a liquid in order to form a substrate slurry, a feeding device for feeding the slurry into the reactor, and a reservoir for the digested substrate.

The anaerobic degradation process is complex and depends on a balanced action of several microbial groups (Gujer and Zehnder, 1983). During the process, biopolymers are initially hydrolyzed and fermented to volatile fatty acids (VFAs), hydrogen (H₂), and carbon dioxide (CO₂) by the hydrolytic/fermentative group of bacteria. VFAs such as propionate, butyrate and isobutyrate are subsequently oxidized by acetogenic bacteria producing acetate, H₂, and CO₂, and finally, for biogas production processes, these products are converted to methane (CH₄), CO₂, and H₂O by methanogens (Schink, 1988).

The growth rates and the sensitivity toward environmental changes differ widely between the different groups of microorganisms. The methanogens are the slowest growing and the most sensitive organisms of those mentioned and adverse process conditions such as organic overload, unfavorable pH, or the presence of toxic compounds, may affect the methanogens negatively, which in turn may lead to process instability. This may be observed by elevated concentrations of metabolites, such as H₂, VFAs, and alcohols, in the metabolic chain preceding the action of the methanogens. For instance, increased levels of VFAs may cause a decrease of the pH, which in severe cases may lead to acidification of the reactor with complete inhibition of the methanogenic activity. This situation makes it necessary to remove the reactor content and to restart the process.

The feed rate in anaerobic digestion processes, *i.e.*, the amount and frequency of adding new substrate to the reactor, is usually adjusted depending on the current (microbial) status of the reactor and the amount of nutrients present in the used substrate, resulting in a certain hydraulic retention time. Typically, a shortfall of nutrients results in an immediate reduction of the product quantity while a surplus of nutrients results in an unbalanced state of the reactor that over time results in a reduction of product quantity. Longer periods of shortfall of nutrients (*i.e.*, too long retention time of the substrate in the reactor) or surplus of nutrients (*i.e.*, too short retention time of the substrate in the reactor) may result in a total collapse of the process, requiring a time-consuming and costly restart.

A common way of preventing instability problems in anaerobic digestion processes, *e.g.*, acidification, is to keep the organic load of the reactor far below its maximum capacity. However, a more economically favorable way of operating a plant and avoiding instability problems is to monitor the process in order to detect instability problems. In case it is detected that there are instability problems, countermeasures to compensate for the instability may be implemented. For example, the feed rate may be adjusted in order to counteract instability problems.

Today, there is a lack of devices that may be utilized for monitoring anaerobic digestion processes on-line. There are known devices for performing reliable and cost-effective on-line measurements in order to monitor simple physical and chemical parameters such as temperature, pH, redox potential (ORP), substrate flow rates, and gas flow rates and composition. However, measurements in order to monitor more complex parameters such as total suspended solids (TSS), organic dry matter (oDM), volatile fatty acids (VFAs), partial alkalinity (PA), and ammonia nitrogen (NH₄-N) are today usually performed off-line due to lack of effective devices for on-line measurements in order to monitor such parameters. Off-line measurements in order to monitor complex parameters are often only carried out monthly because of the high costs of lab analyses. In general, liquid-phase parameters (pH, alkalinity, and VFAs) reflect the environment of the microorganisms and therefore often give a faster response than gas-phase parameters (gas composition and production rate).

It is well accepted that alkalinity and VFA concentrations may serve as efficient indicators of process imbalances. pH is commonly used as a process indicator, but the effectiveness of using this as a control parameter is strongly dependent on the alkalinity of the process (Ahring *et al.,* 1995). On-line methods for monitoring alkalinity have been developed based on sample saturation with carbon dioxide and acidification to release bicarbonate as carbon dioxide with subsequent gas-pressure or gas-flow determination (Hawkes *et al.*, 1993; Rozzi and DiPinto, 1994). Also on-line methods based on other principles such as titration have been developed (Powell and Archer, 1989; Almeida *et al.,* 2001), as well as an automated system for alkalinity measurement based on a spectrophotometric method using a pH indicator (Jantsch and Mattiasson, 2004).

Automated procedures for the determination of VFAs in aqueous solutions have been reported. These include mainly colorimetric methods (Grutz, 1967), titrimetric methods (Powell and Archer, 1989; Feitkenhauer *et al.*, 2002), as well as on-line gas chromatography (Ballesteros *et al.*, 1993; Pind *et al.,* 2003) and liquid chromatography (Liu *et al.*, 2001). The first two methods, applicable only for the determination of the total concentration of VFAs, are based on simple procedures and although they provide accurate results they have the disadvantage of not being able to simultaneously analyze individual VFAs in the fermentation liquid. The on-line chromatography methods can analyze individual VFAs, but a disadvantage is that one or more sample preparation steps must be included because most of the samples are not fully compatible with the chromatographic analysis. These steps often result in a highly complex instrumentation (Diamantis *et al.,* 2006).

Furthermore, in biogas production plants, the use of on-line instrumentation and control equipment is only in its early stage as compared to other biological processes, *e.g.*, waste water treatment plants or biopharmaceutical processes. Therefore, many biogas production plants run sub-optimally and are operated in critical load ranges for economic reasons (Kujawski *et a*/*.*, 2007).

One example of a sensor system that may be utilized for monitoring a parameter, such as the concentration of an analyte, pH, etc., in a liquid is the voltammetric electronic tongue disclosed in WO 99/13325 and in the article by F. Winquist et al., "Monitoring of freshness of milk by an electronic tongue on the basis of voltammetry", Meas. Sci. Technol, 9 (1998) 1937-1946. More specifically, WO 99/13325 and the mentioned article disclose a sensor device comprising a probe with at least one working electrode and an auxiliary (counter) electrode. The sensor device comprises further a control unit, *e.g.*, a potentiostat. The working electrode(s) and the auxiliary electrode are connected to the control unit, and each electrode has an operative end surface adapted to be arranged in contact with the liquid in order to form an electric circuit. The measurement principle is based on pulse voltammetry, whereby a series of different voltage pulses are applied between the working and auxiliary electrodes by means of the control unit, and the resulting electric current in the electric circuit, including transients, is recorded by means of the control unit at different potentials. The recorded electric current is then analyzed using means for performing multivariate signal processing methods in order to obtain information about a parameter in a liquid. The means for performing multivariate signal processing methods is connected to the control unit of the sensor device. The information content in the measurements may be increased by utilizing multiple working electrodes made from different materials and by varying the number, amplitude and/or timing of the applied voltage pulses.

However, the sensor device and system disclosed in WO 99/13325 and the mentioned article by F. Winquist *et al.* are not suitable to utilize for monitoring an anaerobic digestion process in an electrically conductive reactor liquid comprising organic material. This is due to the fact that different types of contaminants are loosely or tightly bound to the operative end surface of the working electrode(s) and the auxiliary electrode during use thereof in the reactor liquid. For example, gas bubbles produced during the anaerobic digestion process accumulate (*i.e.*, they are loosely bound) on the operative end surface of the electrodes. In addition, other contaminants such as reaction products are loosely or tightly bound to the end surface of the electrodes. Contaminants in the form of, for example, sticking gas bubbles and reaction products imply that a response signal corresponding to the resulting electric current in the electric circuit drops (*i.e.*, the response signal is instable), whereby no relevant measurements may be made by means of the sensor device.

WO99/57551 discloses a wood chip digester comprising an electrode cleaning mechanism comprising a rotating shaft and a cleaning baffle (9) which directs solvent supplied under pressure to hit the underside of the electrodes (7); the spray action removes built-up material deposits from the electrode surface.

Thus, there is still a need for a sensor device, a system and a method based on pulse voltammetry, which may be utilized for monitoring an anaerobic digestion process in an electrically conductive liquid comprising organic material.

### SUMMARY OF THE INVENTION

Accordingly, one object of the present invention is to provide an improved sensor device for monitoring an anaerobic digestion process in an electrically conductive liquid comprising organic material, said sensor device comprising:
- a probe comprising at least one working electrode and an auxiliary electrode; and
- a control unit;
said control unit being arranged to apply a series of voltage pulses between said at least one working electrode and said auxiliary electrode, each of said electrodes having an operative end surface being adapted to be arranged in contact with said liquid so as to form an electric circuit, and said control unit further being arranged to record a response signal corresponding to an electric current generated in said electric circuit in response to an applied voltage pulse.

This object is achieved by the fact that the sensor device further comprises an abrasive device having at least one abrading surface, said abrasive device being movable in a predetermined pattern in relation to said operative end surface of said electrodes and being arranged in relation to said electrodes such that said operative end surface of each electrode is contacted by at least one of said abrading surfaces during movement of said abrasive device in said predetermined pattern so as to abrade contaminants bound thereon, and said abrasive device being mounted on a mounting means via which said abrasive device is connectable to a drive unit for driving the movement of said abrasive device.

Another object of the present invention is to provide an improved method for monitoring an anaerobic digestion process in an electrically conductive liquid comprising organic material, said method comprising the steps of:
- applying a series of voltage pulses by means of a control unit between at least one working electrode and an auxiliary electrode, each electrode having an operative end surface which is arranged in contact with said liquid so as to form an electric circuit; and
- recording a response signal corresponding to an electric current generated in said electric circuit in response to an applied series of voltage pulses, said response signal being recorded by means of said control unit.

This object is achieved by the fact that contaminants bound to said operative end surface of said electrodes are abraded, said abrading being performed by means of an abrasive device having at least one abrading surface, said abrasive device being movable in a predetermined pattern in relation to said operative end surface of said electrodes and being arranged in relation to said electrodes such that said operative end surface of each electrode is contacted by at least one of said abrading surfaces during movement of said abrasive device in said predetermined pattern so as to abrade contaminants bound thereon.

Preferred embodiments are listed in the dependent claims.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures described herein.

### BRIEF DESCRIPTION OF THE DRAWINGS

In the drawings, wherein like reference characters denote similar elements throughout the several views:

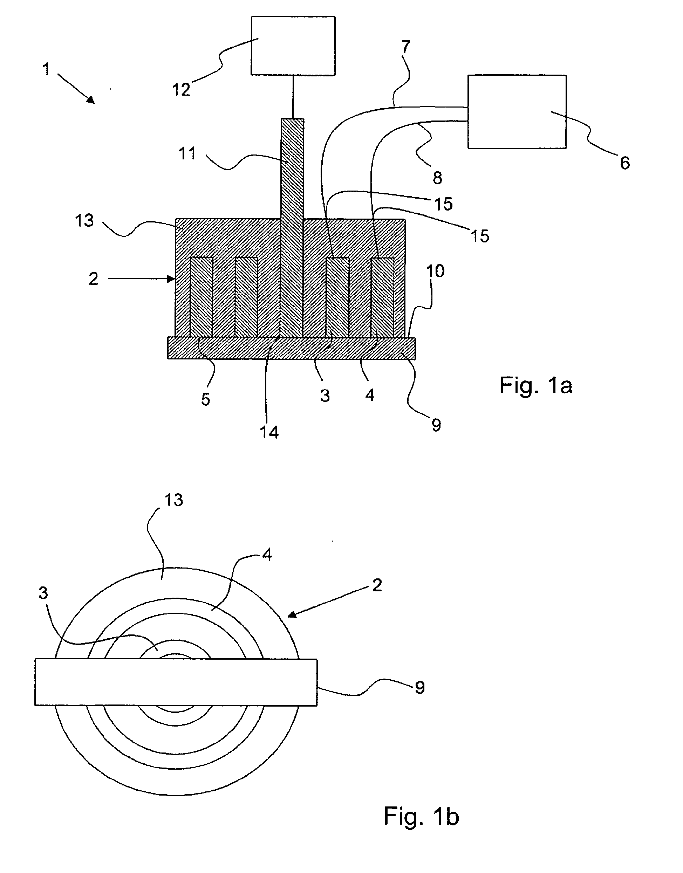

Figure 1 a shows schematically a first embodiment of a sensor device according to the invention in a partly cross-sectional view;
Figure 1 b shows an end view of the sensor device shown in figure 1 a;
Figure 2 shows a schematic view of the sensor device shown in figure 1 comprised in a gas and liquid tight probe housing and mounted to a reactor;
Figure 3 shows the first embodiment of the sensor device with a biasing device that provides a constant force between the abrasive device and the operative end surface of the electrodes;
Figure 4 shows a second embodiment of the sensor device according to the invention;
Figure 5 shows a system according to the invention;
Figure 6 shows a series of voltage pulses utilized in the experiments;
Figure 7 shows the measured response signal at one particular potential as a function of time from a working electrode made of platinum in the first experiment;
Figure 8 shows the measured response signal at one particular potential as a function of time from the working electrodes in the second experiment;
Figure 9 shows the measured response signal at one particular potential as a function of time for the third experiment during operation over a period of 13 days;
Figure 10 shows a PCA plot for the third experiment; and
Figures 11 a and 11 b show the measured response signal from a Pt/Ir electrode at one particular potential as a function of time for reactor A and reactor B, respectively, in the fourth experiment.

### DETAILED DESCRIPTION OF PREFERRED EMBODIMENTS

As above mentioned, the present invention relates to a sensor device that may be utilized for monitoring an anaerobic digestion process (*e.g.*, a biogas production process) in an electrically conductive liquid comprising organic material. For example, an "electrically conductive liquid comprising organic material" may be formed by adding organic material to an electrically conductive liquid (*e.g.*, water). Alternatively, an "electrically conductive liquid comprising organic material" may be formed by adding organic material to a liquid not being electrically conductive (*e.g.*, distilled water), whereby an electrically conductive liquid comprising organic material is formed due to the fact that organic material utilized in anaerobic digestion processes partly dissolve upon being added to said liquid, releasing large amounts of ions. The organic material may be partly suspended in the electrically conductive liquid.

Figure 1 a shows schematically a first embodiment of a sensor device 1 according to the invention in a partly cross-sectional view and figure 1 b shows an end view of the first embodiment of the sensor device 1. In the first embodiment, the sensor device 1 according to the invention comprises a probe 2 comprising a working electrode 3 and an auxiliary (counter) electrode 4. Thus, in the first embodiment, the probe 2 comprises one working electrode 3. However, in alternative embodiments described below, the probe 2 comprises more than one working electrode 3. Each electrode 3, 4 has an operative end surface 5, which is adapted to be arranged in contact with an electrically conductive liquid comprising organic material. The probe 2 may also be denoted as an electrochemical probe.

The sensor device 1 is designed for utilization of pulse voltammetry for measurements of an electrically conductive liquid comprising organic material, *i.e.*, the sensor device 1 is based on pulse voltammetry. Therefore, the sensor device 1 comprises further a control unit 6. In the first embodiment, the control unit 6 is arranged to apply a series of voltage pulses between the working electrode 3 and the auxiliary electrode 4, *i.e.*, it is arranged to apply a varying potential to the working electrode 3 and the auxiliary electrode 4 according to a predetermined pattern. More specifically, the control unit 6 is connected to the electrodes 3, 4 by electrical leads 7, 8, whereby a closed circuit is formed when the operative end surface 5 of the electrodes 3, 4 is in contact with an electrically conductive liquid. In the first embodiment, the electrodes 3, 4 are coupled to the control unit 6 such that a standard two-electrode configuration is achieved. An electric current flows through the closed circuit as a response to an applied voltage pulse between the working electrode 3 and the auxiliary electrode 4. The control unit 6 is further arranged to record a response signal corresponding to an electric current generated in the electric circuit in response to an applied voltage pulse.

For example, the control unit 6 may comprise a potentiostat which supervises that the predetermined potential at a certain moment is maintained and which records the created current response signal. Alternatively, the control unit 6 may comprise any other suitable device working as a pulse generator for applying a predetermined series of voltage pulses between the electrodes 3, 4 and as a recording device for recording a created response signal. In addition, the pulse generator and the recording device may be the same or different devices.

In the first embodiment, the control unit 6 is shown as a separate unit. Alternatively, it may, however, be positioned in the probe 2.

The sensor device 1 according to the invention may be designed for use of at least two types of pulse voltammetry, which provide different current responses. These are generally called LAPV (Large Amplitude Pulse Voltammetry) and SAPV (Small Amplitude Pulse Voltammetry). The voltammetry measurement as such is not an object of the present invention, but is described in detail in WO 99/13325, which is referred to and hereby is included in this application by reference.

Furthermore, the sensor device 1 according to the invention comprises further an abrasive device 9 having an abrading surface 10. The abrasive device 9 is movable in a predetermined pattern in relation to the operative end surface 5 of the electrodes 3, 4. More specifically, in the first embodiment shown in figures 1 a and 1b, the abrasive device 9 is movable through rotation in relation to the operative end surface 5 of the electrodes 3, *4, i.e.,* it may be rotated. Furthermore, the abrasive device 9 is arranged in relation to the electrodes 3, 4 such that the operative end surface 5 of each electrode 3, 4 is contacted by the abrading surface 10 during movement of the abrasive device 9 in the predetermined pattern, *i.e.*, during rotation of the abrasive device 9, so as to abrade contaminants bound thereon. Thus, the abrasive device 9 is arranged such that the abrading surface 10 is arranged so close to the operative end surface 5 of each electrode 3, 4 such that it performs an abrading effect thereon during rotation of the abrasive device 9. Thereby, it abrades, *i.e.*, removes, contaminants bound tightly to the operative end surface 5 of the electrodes 3, 4, *e.g.*, reaction products. In addition, it abrades loosely bound contaminants and gas bubbles accumulated on the operative end surface 5 of the electrodes 3, 4. Preferably, the abrasive device 9 has such a design and is arranged in relation to the electrodes 3, 4 that an abrading effect on the complete operative end surface 5 of the electrodes 3, 4 is achieved.

The abrasive device 9 may be arranged to be continuously or intermittently moved in the predetermined pattern (*e.g.*, continuously or intermittently rotated) such that an abrasion (*e.g.*, a continuous or intermittent abrasion) of contaminants bound to the operative end surface 5 of the electrodes 3, 4 is achieved. For example, the abrasive device 9 may be arranged to be continuously moved (*e.g.*, continuously rotated) at least before or while a series of voltage pulses is applied and when the response signal is recorded. By means of the abrading of contaminants bound to the operative end surface 5 of the electrodes 3, 4, fluctuations of the response signal are reduced, *i.e.*, the response signal is stabilized. As mentioned above, gas bubbles accumulated on the operative end surface 5 of the electrodes and contaminants bound tightly or loosely thereon destabilize the response signal. More specifically, gas bubbles and other bound contaminants imply that the response signal drops, whereby no relevant measurements may be made. For example, the response signal may drop to a low, or a very low, value. This will be further shown in the experiments described below.

Thus, when the sensor unit 1 is utilized for monitoring an anaerobic digestion process, the abrasive device 9 may be continuously or intermittently moved in the predetermined pattern.

The abrasive device 9 is mounted on a mounting means 11, which in the first embodiment is a rotating axis. The abrasive device 9 is connectable via the rotating axis 11 to a drive unit 12 for driving the rotation of the abrasive device 9. The drive unit will be further described below.

Furthermore, in the first embodiment shown in figures 1 a and 1b the electrodes 3, 4 are annular electrodes, which are embedded in a cylindrical support structure 13 made from an electrically insulating material. For example, the electrically insulating material may be an epoxy resin. Each respective annular electrode 3, 4 has a non-embedded annular end surface, which constitutes the operative end surface 5. The annular electrodes 3, 4 have different diameters and are arranged concentric. In the first embodiment, the rotating axis 11 passes through the cylindrical support structure 13 in a gas tight feed-through 14 being arranged concentric with the annular electrodes 3, 4. However, the rotating axis 11 may pass through the cylindrical support structure 13 in a gas tight feed-through 14 being arranged in any other suitable way, *e.g.*, parallel with the longitudinal extension of the cylindrical support structure 13. The feed-through 14 for the rotating axis 11 may be made gas tight by using, *e.g.*, a bushing or a magnetic or ferrofluidic sealing. The feed-through 14 for the rotating axis 11 is required to be gas tight since flammable gases are produced in the anaerobic digestion process. The feed-through 14 for the rotating axis 11 may also be liquid tight. Furthermore, the cylindrical support structure 13 comprises one gas tight, and possibly liquid tight, electric feed-through 15 for each electrode 3, 4 for electrical connection of the electrodes 3, 4 to the control unit 6 by means of the electrical leads 7, 8.

The sensor device 1 according to the invention may comprise the drive unit 12. Alternatively, however, the sensor device 1 does not comprise the drive unit 12, but is connectable to the drive unit 12. The drive unit 12 may be, *e.g.*, a motor connected to a gear box. In the embodiment shown in figure 1 a, the drive unit 12 is comprised in the sensor device 1, whereby the abrasive device 9 is connected to the drive unit 12 via the rotating axis 11.

Optionally, the probe 2 of the sensor device 1 shown in figures 1 a and 1 b may be arranged in a gas and liquid tight probe housing (not shown in figures 1 a and 1b). The cylindrical support structure 13 with the electrodes 3, 4 is then arranged gas tight in an aperture of the probe housing such that the operative end surface 5 of the electrodes 3, 4 is adapted to be arranged in contact with a liquid. The probe housing may, *e.g.*, be made of stainless steel. Furthermore, the drive unit 12 may then be arranged within the probe housing. Since the probe housing is gas tight and since the support structure 13 is gas tight and mounted gas tight to the probe housing, flammable gases produced during an anaerobic digestion process may not reach the drive unit 12.

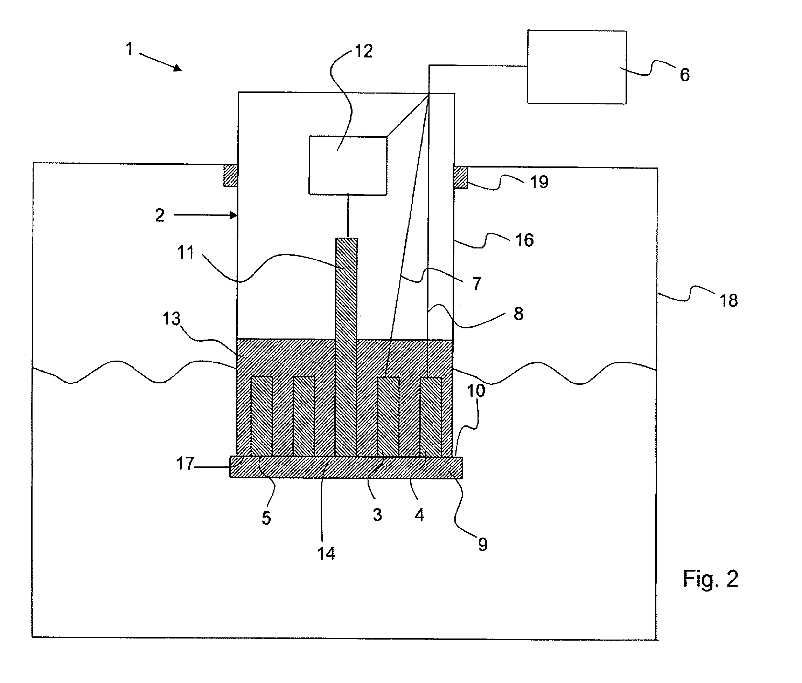

Figure 2 shows a schematic view of the sensor device 1 shown in figure 1 a comprised in a gas and liquid tight probe housing 16. The cylindrical support structure 13 with the electrodes 3, 4 is then arranged gas tight in an aperture 17 of the probe housing 16 such that the operative end surface 5 of the electrodes 3, 4 is adapted to be arranged in contact with a liquid. The drive unit 12 is contained in the probe 2. Alternatively, the drive unit 12 may be adapted to be arranged outside the probe 2, and preferably outside a reactor. For example, the drive unit 12 may be comprised in a separate unit (i.e. not in the probe).

The probe 2 of the sensor device 1 according to the invention may be adapted to be mounted to a reactor, to be mounted in a bypass loop or to be suspended in a liquid comprised in the reactor. The embodiment of the sensor device 1 shown in figure 2, in which the drive unit 12 is comprised in the probe housing 16, is particularly suitable to utilize in case the probe 2 is to be mounted from the bottom of a reactor, in a bypass loop or to be suspended in the liquid in the reactor. The embodiment of the sensor device 1 shown in figure 2 allows the probe 2 to be fully submerged in the reactor sludge, allows to keep the probe 2 small and allows varying immersion depths. A further advantage of that embodiment is that the probe 2 may be submerged in the liquid in the reactor upside down, *i.e.*, with the operative end surface 5 of the electrodes 3, 4 facing upwards. This may be an additional protection against sticking gas bubbles, since the gas bubbles will strive to move upwards in the liquid. In addition, probes 2 that may be fully submerged are advantageous to utilize when several probes are to be distributed in a reactor in order to study the homogeneity of an anaerobic digestion process at different positions.

Optionally, the sensor device 1 according to the invention may comprise a probe mounting device for mounting of the probe 2 gas tight to a reactor or to a bypass loop. By means of the probe mounting device it is possible to avoid that flammable gases produced during anaerobic digestion processes escape from the reactor at the sides of the probe 2. In figure 2 the probe 2 is mounted to a reactor 18 by means of a probe mounting device 19. The probe mounting device 19 may be, *e.g.*, a gas tight flange. Optionally, the probe 2 of the first embodiment may further comprise a reference electrode (not shown). The reference electrode is then connected with an electrical lead to the control unit such that a standard three-electrode configuration is achieved.

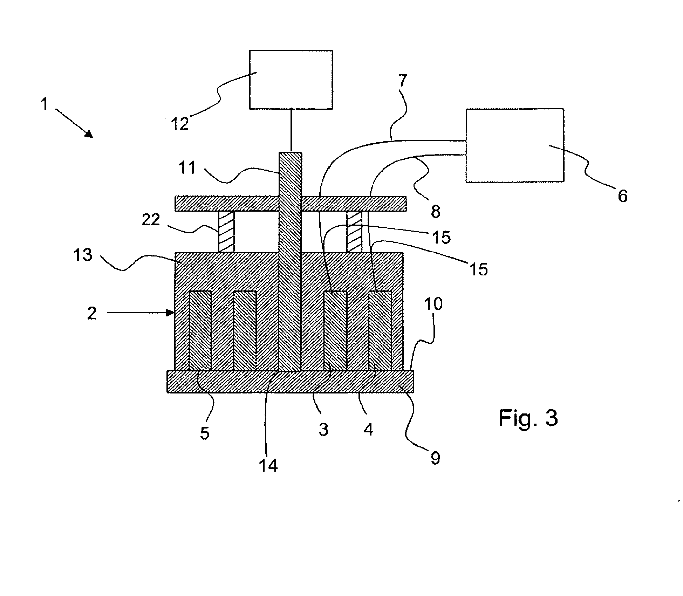

Optionally, the probe of the first embodiment may further comprise a biasing device for biasing the abrasive device with a constant force against the operative end surface 5 of the electrodes 3, 4. For example, such a biasing device may comprise springs. Figure 3 shows the first embodiment of the sensor device 1 with a biasing device comprising two springs 22.

The design of the electrodes 3, 4 and the abrasive device 9 shown in figures 1 a and 1 b implies that the surface area of the operative end surface 5 of the electrodes 3, 4 not being covered by the abrasive device 9 is constant in time during movement (*i.e.*, rotation in the first embodiment) of the abrasive device 9. Thus, the surface area of the operative end surface 5 of the electrodes 3, 4 being exposed to a liquid during use of the sensor unit 1 remains constant independent of the angular position of the abrasive device 9. Furthermore, the surface area of the electrodes 3, 4 that is exposed to the liquid remains constant even as electrode material is slowly abraded.

Furthermore, the first embodiment of the sensor device 1, or variants thereof, may be varied (not shown) such that the probe comprises more than one working electrode. In such variants the probe may comprise any suitable number of annular working electrodes. Each working electrode then has an operative end surface being adapted to be arranged in contact with an electrically conductive liquid. Furthermore, all working electrodes and the auxiliary electrode are then embedded in the cylindrical support structure. However, each annular electrode has a non-embedded annular end surface forming the operative end surface. All annular electrodes have different diameters and are arranged concentric. The rotating axis passes through the cylindrical support structure in a gas tight feed-through being arranged concentric with the annular electrodes. In addition, the cylindrical support structure comprises one gas tight, and possibly liquid tight, electric feed-through for each electrode for electrical connection of the electrodes to the control unit by means of the electrical leads.

In variants of the first embodiment comprising more than one working electrode, the control unit is connected to the working electrodes and the auxiliary electrode by electrical leads, whereby a closed circuit is formed when the operative end surface of the electrodes is in contact with an electrically conductive liquid. The control unit is in such variants arranged to apply a series of voltage pulses between each of the working electrodes and the auxiliary electrode. An electric current flows through the closed circuit as a response to an applied voltage pulse between one of the working electrodes and the auxiliary electrode. The control unit is further arranged to record a response signal corresponding to an electric current generated in the electric circuit in response to an applied voltage pulse. For example, the working electrodes may be connected to a relay box, allowing each working electrode to be connected separately in a two-electrode configuration.

Furthermore, in the variants of the first embodiment comprising more than one working electrode, the abrasive device is arranged in relation to the electrodes such that the operative end surface of all working electrodes and the auxiliary electrode is contacted by the abrading surface during rotation of the abrasive device so as to abrade contaminants thereon. Preferably, the abrasive device has such a design and is arranged in relation to the electrodes that an abrading effect on the complete operative end surface of all working electrodes and the auxiliary electrode is achieved.

In addition, the above described embodiments or variants thereof may be varied such that the electrodes have any other shape than annular. The support structure in which they are embedded may then have any other suitable shape than cylindrical. However, each electrode is in all these cases embedded such that one surface is non-embedded and forms the operative end surface.

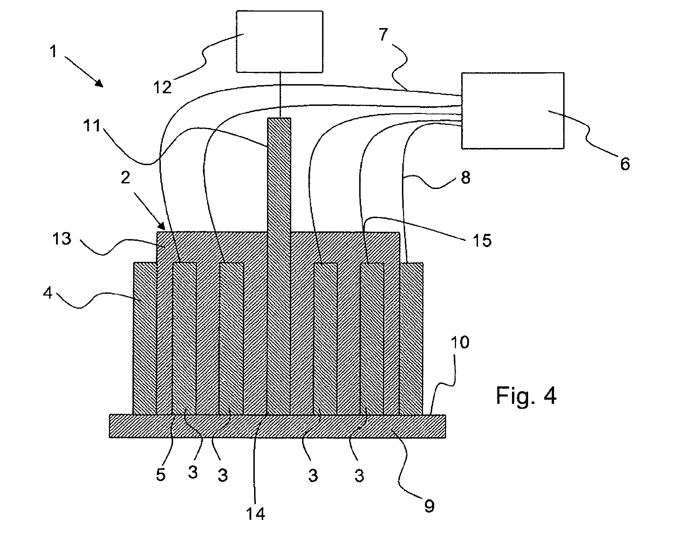

Furthermore, the above described embodiments or variants thereof may be varied such that each working electrode is a metal wire (instead of being an annular electrode) embedded in a support structure. Each metal wire has a non-embedded end surface forming the operative end surface. The support structure is then rod-shaped and the auxiliary electrode is an annular electrode being arranged around the periphery of the rod-shaped support structure. Furthermore, the mounting means passes then through the rod-shaped support structure in a gas tight feed-through being arranged parallel to the longitudinal extension of the rod-shaped support structure. One such variant is shown in figure 4.

More specifically, figure 4 shows a second embodiment of the sensor device 1 according to the invention, which corresponds to the first embodiment shown in figure 1 a except for concerning the number of working electrodes that the probe comprises, the shape of the electrodes and the arrangement of the auxiliary electrode 4. In the second embodiment shown in figure 4, the probe 2 comprises four working electrodes 3. Each working electrode 3 is a metal wire embedded in the support structure 13, whereby each metal wire 3 has a non-embedded end surface forming the operative end surface 5. The support structure 13 is rod-shaped and the auxiliary electrode 4 is an annular electrode being arranged around the periphery of the rod-shaped support structure 13. In the second embodiment, the mounting means 11, *e.g.*, the rotating axis, passes through the rod-shaped support structure 13 in a gas tight feed-through 14 being arranged parallel to the longitudinal extension of the rod-shaped support structure 13. However, the mounting means 11 may pass through the rod-shaped support structure 13 in any suitable way.

In the second embodiment, the control unit 6 is connected to the working electrodes 3 and the auxiliary electrode 4 by electrical leads 7, 8, whereby a closed circuit is formed when the operative end surface 5 of the electrodes 3, 4 is in contact with an electrically conductive liquid. The rod-shaped support structure 13 comprises one gas tight, and possibly liquid tight, electric feed-through 15 for each working electrode 3 for electrical connection of the electrodes 3 to the control unit 6 by means of the electrical leads 7. The control unit 6 is arranged to apply a series of voltage pulses between one working electrode 3 at a time and the auxiliary electrode 4. An electric current flows through the closed circuit as a response to an applied voltage pulse between one of the working electrodes 3 and the auxiliary electrode 4. The control unit 6 is further arranged to record a response signal corresponding to an electric current generated in the electric circuit in response to an applied voltage pulse. For example, the working electrodes 3 may be connected to a relay box (not shown), allowing each working electrode 3 to be connected separately in a two-electrode configuration.

Furthermore, in the second embodiment the abrasive device 9 is arranged in relation to the electrodes 3, 4 such that the operative end surface 5 of all working electrodes 3 and the auxiliary electrode 4 is contacted by the abrading surface 10 during rotation of the abrasive device 9 so as to abrade contaminants thereon. Preferably, the abrasive device 9 has such a design and is arranged in relation to the electrodes 3, 4 that an abrading effect on the complete operative end surface 5 of all working electrodes 3 and the auxiliary electrode 4 is achieved during rotation of the abrasive device 9.

The second embodiment shown in figure 4 may of course be varied such that it comprises another number of working electrodes, *i.e.*, it may comprise one, two or three working electrodes or more than four working electrodes. In all cases the abrasive device is arranged in relation to the working electrode(s) and the auxiliary electrode such that the operative end surface of all electrodes is contacted by the abrading surface during rotation of the abrasive device. Furthermore, the second embodiment may be varied in accordance with any other variations of the first embodiment. For example, it may further comprise a reference electrode, it may comprise a probe housing, it may comprise a probe mounting means and/or it may comprise a biasing device.

In the above described embodiments and variants thereof, the abrasive device is movable through rotation in relation to the operative end surface of the electrodes. However, the abrasive device may be movable in any other way than rotation in relation to the operative end surface of the electrodes. Then the mounting means may be any other mounting means than a rotating axis. For example, the abrasive device may be moved by oscillation. Furthermore, in the above described embodiments and variants thereof, the abrasive device has one abrading surface. However, it may likewise be designed to have more than one abrading surface. For example, it may be designed such that it has one abrading surface for each electrode.

However, in all cases the abrasive device has at least one abrading surface. The abrasive device is movable in a predetermined pattern in relation to the operative end surface of the electrodes and is arranged in relation to the electrodes such that the operative end surface of each electrode is contacted by at least one of the abrading surfaces during movement of the abrasive device in the predetermined pattern so as to abrade contaminants bound thereon. The abrasive device may be arranged to be continuously or intermittently moved in the predetermined pattern such that a continuous or intermittent abrading of contaminants bound to said operative end surface of the electrodes is achieved, whereby fluctuations of the response signal are reduced. The abrasive device is mounted on a mounting means via which said abrasive device is connectable to a drive unit for driving the movement of the abrasive device.

For example, the abrading surface(s) of the abrasive device of any of the above embodiments may be a grinding stone surface, *i.e.*, the abrasive device may be a grinding stone. Alternatively, the abrading surface(s) may be of any other suitable material that may exert an abrasive effect on the operative end surface of the electrodes, *e.g.*, a rubber-like material containing abrasive particles.

Preferably, the auxiliary electrode of the sensor device according to the invention is made of stainless steel. However, other materials are of course also conceivable, *e.g.*, Pt, Au. The working electrode(s) may, *e.g.*, be made of a material selected from the group consisting of Rh, Pt, Au, Os, Ru, Ni, Ti, Re, Ir and alloys thereof, or alloys with other metals.

However, the auxiliary electrode and the working electrode(s) are preferably made of materials having essentially the same hardness such that the electrodes have essentially the same hardness. Thereby the abrading surface(s) will abrade essentially equally on the operative end surface of the different electrodes.

In case the sensor device according to the invention comprises only one working electrode, one preferred example is that the working electrode is made of an alloy of Pt and Ir (*e.g.*, in the ratio of 90:10) and that the auxiliary electrode is made of stainless steel.

In case the sensor device according to the invention comprises two working electrodes, one preferred example is that one working electrode is made of an alloy of Pt and Ir (*e.g.*, in the ratio of 90:10), that the other working electrode is made of Au and that the auxiliary electrode is made of stainless steel.

In case the sensor device according to the invention comprises a reference electrode, an Ag/AgCl (KCI 3M) may be utilized as the reference.

In addition, the present invention relates to a system for monitoring an anaerobic digestion process (*e.g.*, a biogas production process) in an electrically conductive liquid comprising organic material. The system according to the invention comprises any of the above described embodiments or variants of the sensor device according to the invention and
- a memory for storing at least some recorded electric current values in a data matrix;
- a processing device for performing a multivariate data analysis of the stored electric current values; and
- optionally, a display device for displaying the result of the multivariate data analysis.

During measurements by means of the sensor device 1 according to the invention an amount of data results, *i.e.*, the control unit records an amount of electric current values. This amount of data may be stored in the memory for storing recorded electric current values. Then the data may be analyzed by means of performing a multivariate data analysis of the stored electric current values and the display device may display the results. Optionally, the system according to the invention may further comprise a sampling device for sampling values of the response signal at predetermined intervals.

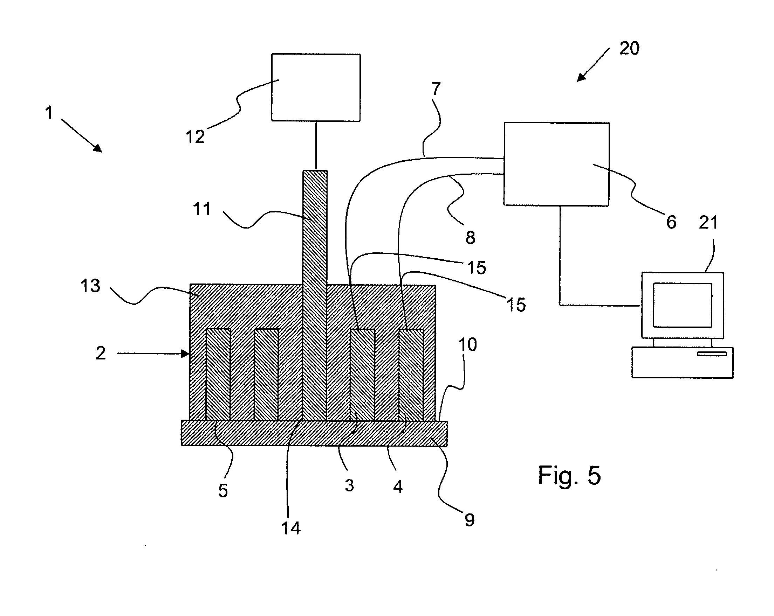

For example, the memory for storing recorded values, the processing device and the display device may be comprised in the same unit, such as, *e.g.*, a personal computer (PC). Alternatively, they may be comprised in separate units. One example of a system 20 according to the invention which comprises a personal computer 21 and the first embodiment of the sensor device 1 is shown in figure 5. The personal computer 21 comprises a memory for storing recorded electric current values in a data matrix, a processing device for performing a multivariate data analysis of the stored electric current values and a display device for displaying the result of the multivariate data analysis.

By means of the sensor device according to the invention, measurements may be performed on the sludge in a main digester, on the sludge in a bypass of the main digester, on the feed or on the residue. Furthermore, measurements may be performed on-line by means of the sensor device according to the invention. Measurements by means of the sensor device according to the invention may be combined with pH, redox potential, alkalinity, gas yield, gas composition, turbidity measurements, etc. and measurements of total solids by means of any other suitable measurement devices. Furthermore, the present invention relates to a method for monitoring an anaerobic digestion process (*e.g.*, a biogas production process) in an electrically conductive liquid comprising organic material. The method comprises the steps of:
- applying a series of voltage pulses by means of a control unit between at least one working electrode and an auxiliary electrode, each electrode having an operative end surface which is arranged in contact with the liquid so as to form an electric circuit; and
- recording a response signal corresponding to an electric current generated in the electric circuit in response to an applied series of voltage pulses, the response signal being recorded by means of the control unit.

In addition, in the method according to the invention contaminants bound to the operative end surface of the electrodes are abraded. The abrading may e.g., be performed before or during the step for applying a series of voltage pulses and the step for recording a response signal. The abrading is performed by means of an abrasive device having at least one abrading surface, whereby the abrasive device is movable in a predetermined pattern in relation to the operative end surface of the electrodes and is arranged in relation to the electrodes such that the operative end surface of each electrode is contacted by at least one of the abrading surfaces during movement of the abrasive device in the predetermined pattern so as to abrade contaminants bound thereon. By means of the abrading, fluctuations of the response signal are reduced.

Furthermore, the method according to the invention may further comprise the steps of:
- storing at least some recorded electric current values in a memory;
- performing a multivariate data analysis of the stored electric current values by means of a processing device; and
- optionally, displaying the result of the multivariate data analysis.

Thus, in the method and system according to the invention the response signals may be analyzed using a previously known analysis method called multivariate data analysis. There are many different multivariate data analysis methods that may be utilized in the present invention. Principal component analysis (PCA) is proposed as a general tool to provide an overview of the relatively large amount of measured data as well as a tool for determining qualitative information about the measured samples. Partial least squares (PLS), multiple linear regression (MLR), and principal component regression (PCR) are proposed as tools for linear regression to determine quantitative information about the measured samples. Artificial neural networks (ANN) and project pursuit regression (PPR) are proposed as tools for non-linear regression to determine quantitative information about the measured samples. All these algorithms are well known and detailed descriptions of them may be found in numerous commonly-available books and articles. For example, the international applications WO 99/13325, WO 02/44460 and WO 02/052254 describe multivariate data analysis methods.

Although the above-mentioned algorithms are highly suited for many types of applications of pulse voltammetry, including measurements on continuous processes, they may be insufficient to analyze the measured data from anaerobic digestion processes or other complex processes that exhibit large variations over time also under normal conditions. Due to the normally intermittent feeding in the anaerobic digestion processes, large variations in the physiological and chemical properties of the reactor contents will occur also when the process is running under stable and optimal conditions. During the initial start-up phase of a process, even larger variations will occur. It may therefore be necessary to combine the multivariate-statistics algorithms with, or even completely resort to, algorithms that are more suitable for handling varying conditions by building dynamical models of the measured data (as opposed to the static models obtained using multivariate statistics). Such algorithms belong to the field of system identification.

System identification distinguishes between parametric and non-parametric (black-box) models. The use of parametric models assumes some *a priori* knowledge about the studied system. Given the complexity of anaerobic digestion processes, non-parametric models may be more suitable. Some well-known algorithms for estimation of linear non-parametric models are autoregressive models (ARX, ARMAX), Box-Jenkins (BJ) models, and output-error (OE) models. For non-linear non-parametric modeling, *e.g.*, non-linear ARX may be used.

Thus, by utilizing any of the above methods, it is possible to analyze the recorded signals and the result of the analysis may be utilized in order to monitor an anaerobic digestion process. More specifically, by analyzing the recorded signals at different points in time by means of any of the above methods and compare the results of the analysis, it is possible to monitor an anaerobic digestion process. In case the result of the analysis of the signals recorded at different points in time differ, this indicates that the process has changed in some way, *i.e.*, that a property of the process has changed. Thus, the analyzed signals provide real-time information about the stability of the process. This will be further described below in connection with the experiments. Alternatively, the results of the analysis of the recorded signals may be compared with reference data to determine the current process status.

For example, the stability and yield of an anaerobic process may be monitored. Thus, the normal operation of the process may thereby be verified and any process abnormalities may be identified. The results may be presented to a plant operator, who may react to any abnormality, *e.g.*, by changing the substrate feeding strategy.

The effect of the abrasive device included in the present invention will now be illustrated in some experiments. In addition, the applicability of the sensor device, system and method according to the invention for monitoring an anaerobic digestion process in an electrically conductive liquid comprising organic material will be described.

A general advantage with the present invention is that it allows the use of a single probe to detect and determine many different physical and chemical properties of the liquids in anaerobic digestion processes. The alternative would be to use multiple sensors, one for each of the properties of interest. Given the complexity of these processes and the large number of (interdependent) properties that affect the processes, the latter approach becomes too complex and expensive.

In a first biogas process experiment, a prior art sensor device comprising a probe and a control unit were utilized in order to test the applicability of a prior art sensor device for monitoring a biogas production process. The sensor device utilized in the first experiment corresponded to the sensor device shown in figure 4, but without the abrasive device 9, the mounting means 11, the drive unit 12, the feed-through 14 for the mounting means 11 and the probe housing 16. The four working electrodes 3 were made of gold (Au), iridium (Ir), platinum (Pt), and rhodium (Rh), respectively, and the auxiliary electrode 4 was made of stainless steel. The utilized control unit included a pulse generating part arranged to generate voltage pulses of varying amplitude and duration. The control unit also comprised a current measuring part arranged to measure the current at the working electrode by feeding it to a current measuring circuit being sampled at a specific frequency. The pulse generating part and the current measuring part were both galvanically isolated from the power system to which the control unit was connected, meaning they could be operated both in a grounded system or an ungrounded system. Furthermore, a 5 liter glass bottle reactor was utilized as reactor and organic material in the form of slaughterhouse waste was utilized as substrate. The slaughterhouse waste was blended with distilled water in order to form a substrate slurry. Thus the slurry comprised an electrically conductive liquid comprising organic material. The experiment was run at 37 ºC. At each feeding instance (once per day), 150 ml of new substrate slurry was put into the reactor, while an equal amount of digested sludge was removed.

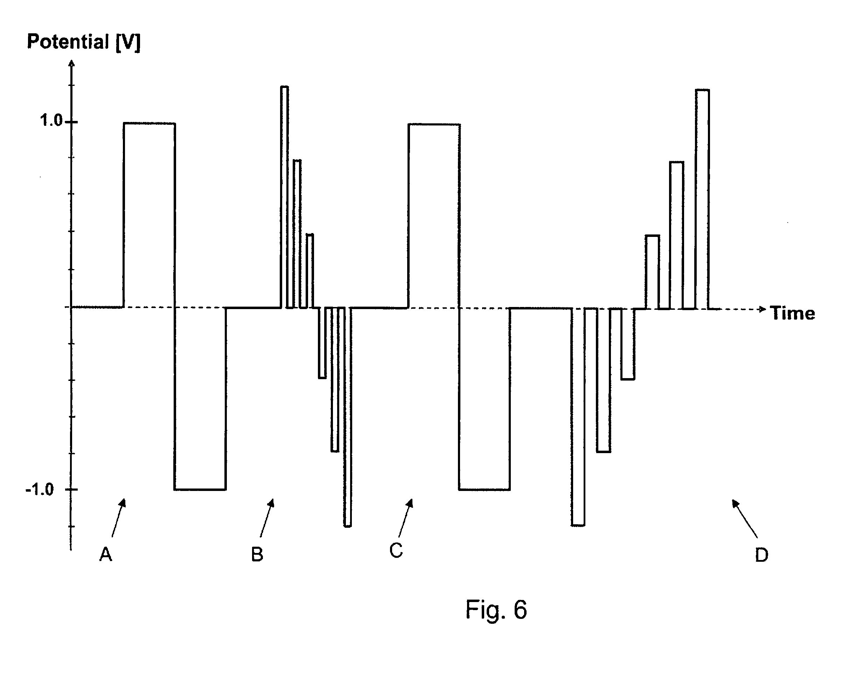

The probe was mounted in the reactor from the top by passing the signal cables through a plastic tube going through a rubber plug, and sealing it with tape on the outside. The series of voltage pulses shown in figure 6 was then applied by means of the control unit to the working electrodes in series, meaning that a complete series of voltage pulses was applied to the first working electrode before being applied to the second working electrode and so on. Each complete series of voltage pulses comprise four different sections A, B, C and D respectively, differing in both voltage amplitudes and pulse durations (see figure 6). The voltage amplitudes are correctly depicted in figure 6 whereas the pulse durations shown are not to scale. With reference to figure 6 the pulse durations were as follows: A: 1000 ms, B: 25 ms; C: 1000 ms and D: 250 ms.

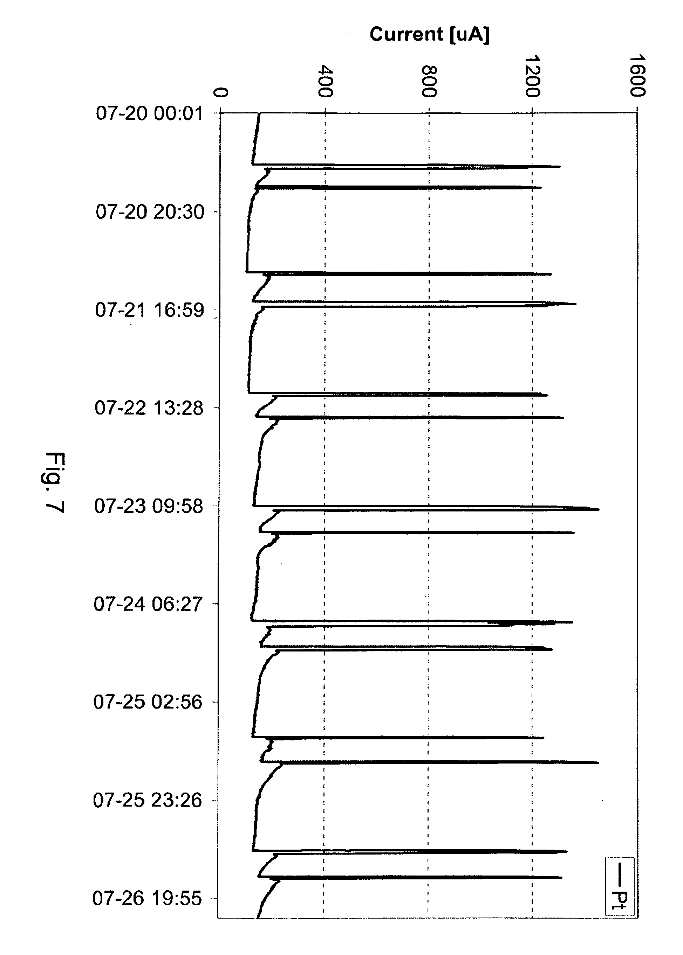

In the first experiment substrate slurry was fed once a day and the content (sludge) in the reactor was only stirred during the feeding process and once shortly every afternoon, *i.e.*, it was not continuously stirred. Stirring was achieved by rotating a stainless steel rod equipped with four propeller-like metallic blades at the lower end. The rod was inserted to the reactor from the top through a plastic tube going through the centre of a rubber plug. Outside of the reactor the top end of the rod was mounted to an electric motor. Figure 7 shows the response signal from the working electrode made of platinum recorded by the control unit at one particular potential as a function of time. It can be clearly seen that the signal quickly drops to a very low value as soon as stirring stops, and increases quickly as soon as stirring starts. This effect is due to the accumulation of tiny gas bubbles on the surface of the working electrode in the absence of stirring. The response signal from the other working electrodes behaved in the same way.

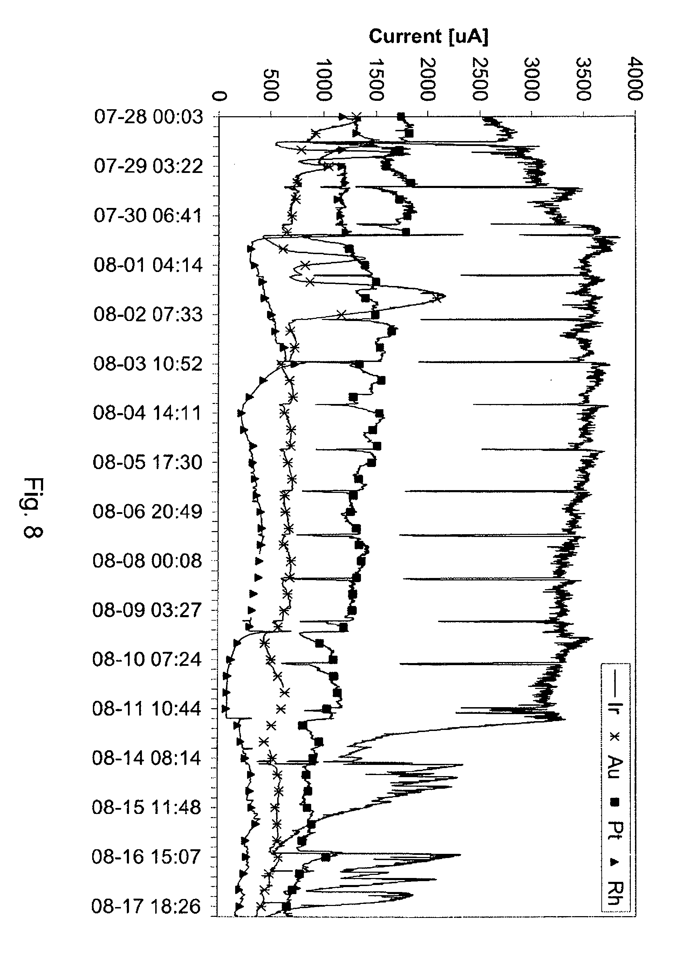

In a second biogas process experiment, the same experiment as in the first experiment was performed (*i.e.*, the same experimental set-up was utilized as in the first experiment) except for concerning the fact that the reactor content was stirred continuously. The same equipment as in the first experiment was utilized for the stirring. Figure 8 shows the response signal from the working electrodes recorded by the control unit at one particular potential as a function of time. From figure 8 it is clear that the accumulation of gas bubbles on the surface of the working electrodes and the concomitant signal drop are no longer a problem when stirring continuously. However, several days after the insertion of a probe with freshly cleaned electrodes the measured signals become unstable. This effect is due to fouling of the electrodes by the reactor sludge and depends on the choice of electrode material. As compared with gold, iridium, and rhodium, platinum and platinum/iridium (90/10) electrodes have been found to be more stable against fouling.

In a third biogas process experiment a sensor device corresponding to the sensor device shown in figure 1 a was utilized. However, the abrasive device 9 was designed such that an abrading effect was achieved only on the working electrode 3, *i.e.*, the abrasive device 9 did not contact the auxiliary electrode 4. The working electrode 3 was made of platinum and the auxiliary electrode 4 was made of stainless steel. The same control unit as in the first experiment was utilized as control unit 6. A motor of the type Berger-Lahr RSM was utilized as drive unit 12. A silicon carbide grinding stone was utilized as abrasive device. Furthermore, a 227 liter plastic barrel reactor was utilized as reactor and organic material in the form of stillage from fermentative ethanol production was utilized as substrate. The substrate was taken from a pilot plant that had been in operation for several months, thus eliminating the need for a prolonged start-up phase of the process. The stillage was used as substrate without prior blending with a liquid as it comprised an electrically conductive liquid with organic material. The experiment was run at 37 ºC. At each feeding instance, 5 liter of new substrate was put into the reactor, while an equal amount of digested sludge was removed. Feeding of new substrate was carried out once a day during weekdays, whereas no feeding was performed during weekends. The reactor content was mixed only during feeding instances by pumping the liquid for a short period of time in a circular bypass loop.

The probe was mounted in the reactor from the top using a flange that was sealed with a Viton® o-ring. The series of voltage pulses shown in figure 6 and described in connection with the first experiment was then applied by means of the control unit to the working electrodes. During the application of the series of voltage pulses and recording of the response signal, the grinding stone was rotated by 10 revolutions per minute. Measurement signals were recorded at an interval of 15 seconds.

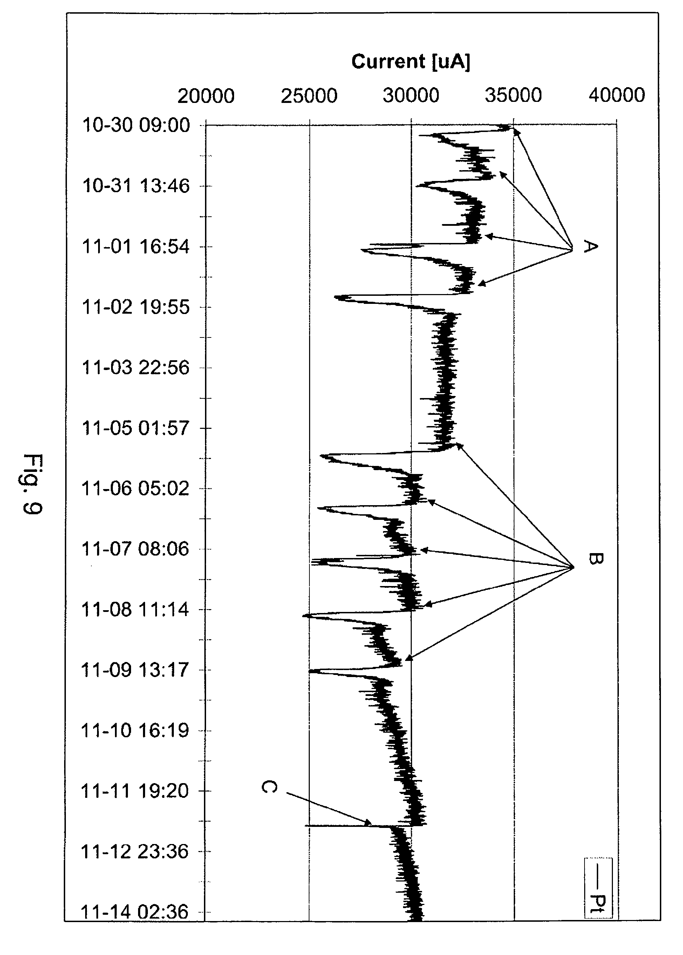

Figure 9 shows the measured response signal at one particular potential as a function of time for the third experiment during operation over a period of 13 days. It is evident from figure 9 that the addition of new substrate to the reactor has a significant effect on the measurement signals. In figure 9, "A" denotes feedings during week 1 (Tue - Fri), "B" denotes feedings during week 2 (Mon - Fri) and "C" denotes manual cleaning of the auxiliary electrode. It may be seen that no signal instabilities occur due to sticking gas or fouling electrodes. The periodic dips in the signal correspond to the daily feeding of the reactor during working days. The signal is largely recurring between the feeding instances and characterized by a rather rapid decrease that is followed by a gradual recovery. It is also interesting to observe that there is a delay of about 2-3 hours between the actual feeding instance and the sudden decrease in signal strength. This delay clearly indicates that the signal change cannot be explained by the dilution effect of feeding. Instead, it suggests that the measurements capture the change in metabolic activity of the microorganisms when exposed to new substrate.

The general decrease of the signal seen during the first week is due to process drift during the start-up phase of the reactor. The sharp decrease in the signal seen towards the end of the measurement period is due to manual cleaning of the auxiliary electrode. This clearly illustrates the need of also continuously cleaning the auxiliary electrode.

In figure 9 a gradual decrease in the current level over time may be observed. Partly, this may be explained by fouling of the non-cleaned auxiliary electrode. More important, however, is the fact that the pilot plant from which the substrate originated was operated at approximately twice the feeding load. The measurements thus capture the gradual adjustment of the microbial community to the new substrate load conditions.

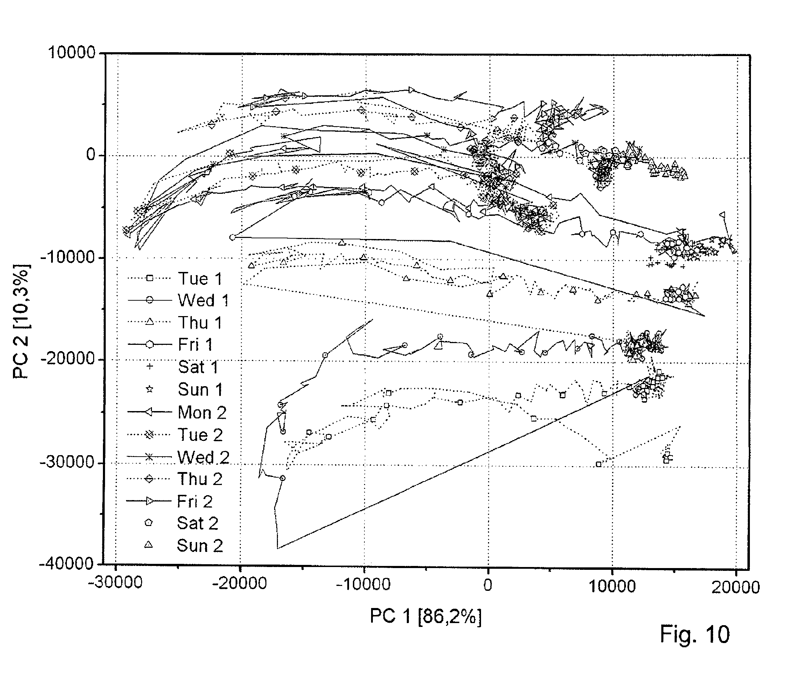

The above experiment illustrates how the invention may be utilized in order to enable monitoring of a biogas production process. One suitable way of presenting the measurement results to the process operator is using multivariate-statistics algorithms that reduce the dimensionality of the measured data, such as PCA. The principle is outlined in figure 10, which shows a PCA score plot calculated from the signal responses measured in the above-mentioned 227 liter barrel reactor experiment. A PCA model was generated using measurements from 4 days. The measured signal responses recorded for each day were then projected onto the generated PCA model to form the shown score plot along the first two principal components PC1 and PC2. The observed pattern is similar for each day of fermentation: starting from a cluster of measurement points prior to feeding, a rapid shift towards decreasing PC1 within 2-3 hours after feeding, which is followed by a slow movement of the measurement points in the direction of increasing PC1 back to the original cluster, ending up in the formation of a larger cluster of measurement points until the next feeding instance. Over the days, the measurement points move slowly in the direction of increasing PC2. Furthermore, during the weekend when feeding does not occur, the measurement points move slowly in the direction of increasing PC1. The score plot is thus indicating higher metabolic activity of the microorganisms in the direction of decreasing PC1. The slow drift along the direction of increasing PC2 is not caused by the fouling of the auxiliary electrode mentioned above, since the manual cleaning of the auxiliary electrode performed at the end of the measurement period caused an abrupt jump along the direction of increasing PC1 only. Rather, the drift along PC2 provides a measure for the stability of the process, such that main clusters for each day of fermentation that end up on top of each other would indicate a stable process. The score plot, updated in real-time during the process, thus provides a means for the plant operator to monitor the evolution of the process and confirm the activity and stability.

Although the above results are obtained for measurements on the liquid phase within the reactor, it is obvious that measurements according to the present invention are suitable also for monitoring the substrate fed to the process and the digested sludge removed from the process.

A fourth biogas process experiment was performed in order to confirm the ability of the measurements to react to different feeding conditions. In the fourth experiment, two 5 liter glass bottle reactors (denoted as reactor A and reactor B) were utilized and organic material in the form of slaughterhouse waste was utilized as substrate. The slaughterhouse waste was blended with distilled water in order to form a substrate slurry. Thus the slurry formed an electrically conductive liquid comprising organic material. At each feeding instance, 150 ml of new substrate was put into the reactor while an equal amount of digested sludge was removed. The experiments were performed at 37 ºC with continuous stirring of the content in the reactors. Stirring was achieved by rotating a stainless steel rod equipped with four propeller-like metallic blades at the lower end. The rod was inserted to the reactor from the top through a plastic tube going through the centre of a rubber plug. Outside of the reactor the top end of the rod was mounted to an electric motor. The electrochemical probe used contained four working electrodes made of Ir, Rh, Pt/Ir (90/10) and Pt/Ir (90/10), respectively, and an auxiliary electrode made of stainless steel. The sensor device utilized in the fourth experiment corresponded to the sensor device shown in figure 4, but without the abrasive device 9, the mounting means 11, the drive unit 12, the feed-through 14 for the mounting means 11 and the probe housing 16. The same control unit as in the first experiment was utilized as the control unit 6. Measurement signals were recorded at an interval of 15 seconds.

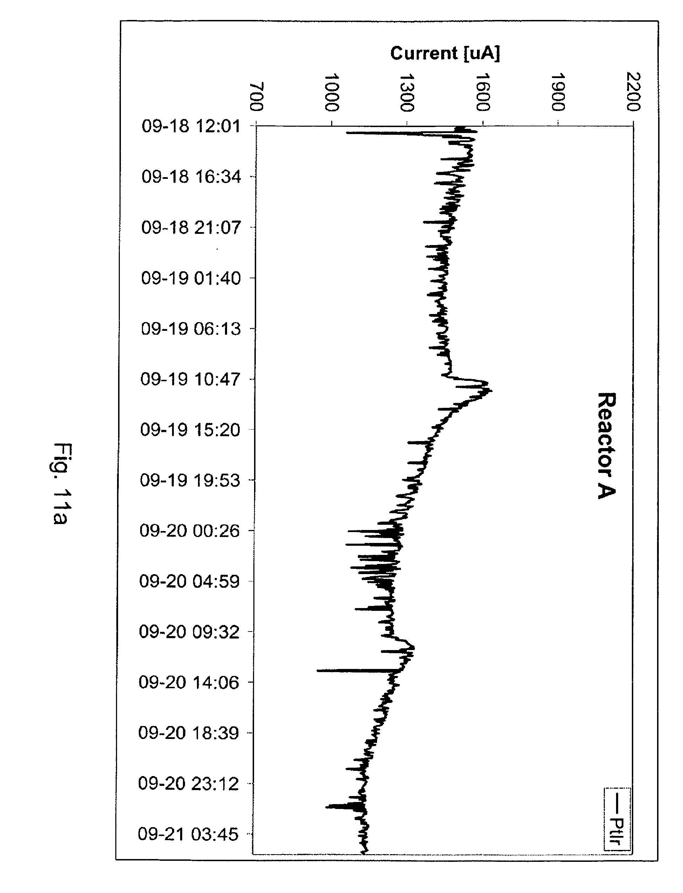

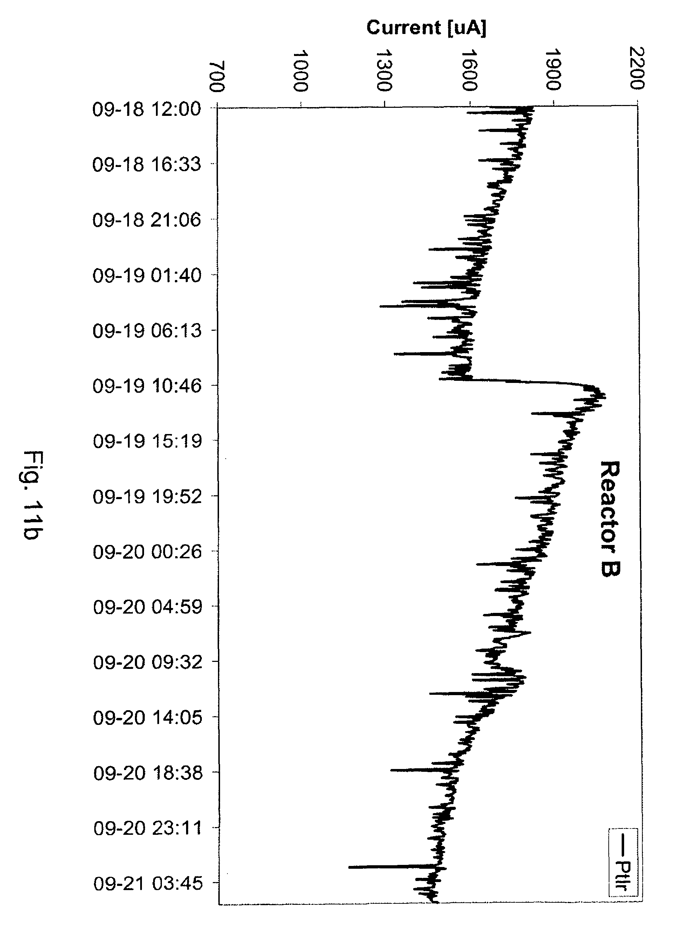

Figures 11 a and 11 b show the measured response signal from one of the Pt/Ir electrodes at one particular potential as a function of time for reactor A and reactor B, respectively, during operation over a period of 3 days. The two reactors, reactor A and reactor B, were operated under normal feeding conditions with feeding performed once a day, but on one occasion, reactor B was subjected to a forced feeding scheme whereby extra butyric and propionic acid was added. The amounts of extra acid were chosen such that the acid concentrations in reactor B directly after feeding would be 50 mM for butyric acid and 25 mM for propionic acid, respectively, which for the studied process corresponds to a significant but not extreme increase of the concentration of acids. When comparing figures 11 a and 11 b, the relative increase of the signal response due to feeding is significantly larger and longer lasting when extra feeding reactor B as compared to normal feeding reactor A. On the subsequent day, normal feeding was carried out in both reactors resulting, as expected, in a similar relative increase of the signal responses for reactors A and B.

Since the above data confirms that the measurements react to different amounts of VFAs, the measured signals may be used to determine quantitative regression models for on-line estimation of the concentration of VFAs in the liquid phase at various positions in anaerobic digestion plants, using linear regression algorithms such as PLS or non-linear algorithms such as ANN. Given the electrochemical differences between different VFAs and that the relative signal changes due to the extra feeding differs for different potentials, it is conceivable that separate regression models may be determined for the concentration of individual VFAs. Thus, the measurement technology, the sensor device and the system according to the invention may also be utilized to model (*i.e.*, estimate) a key process parameter that is characteristic for the status or performance of the anaerobic digestion process.

In view of the nature of the measurement technology of the present invention, it is likely that it may be used to estimate also other key process parameters in anaerobic digestion processes such as the redox potential and the alkalinity. In the latter case, it may be an advantage to complement the measurements with on-line data from a pH probe. Furthermore, it has been shown that the measurement technology may be used to estimate the chemical oxygen demand (COD) in waste water. Thus, the measurements may be used to determine the COD of the substrate fed to the process, the reactor sludge, and the digested sludge removed from the process.

Another interesting parameter to estimate on-line is the product yield (*e.g.*, biogas or hydrogen) at a future point in time. There is some consensus that the product yield, which may be measured directly, is a suitable control parameter in combination with an overriding alarm parameter such as VFA concentration, alkalinity, or pH (see, *e.g.*, Boe et al, 2007). The need for the extra alarm parameter is related to the fact that the product yield may stay high even when the process is approaching unstable conditions. Since measurements according to the present invention have been shown to contain information about the stability and microbial activity and both the current and future productivity are related to the status of the bioreactor sludge and the activity, estimated values for the product yield at an offset future point in time may be suitable for on-line process control without the need for an additional overriding alarm.

Furthermore, by means of the measurement technology, the sensor device and the system according to the invention, measurements may be made on the liquid phase at suitable positions in an anaerobic digestion plant. The signals may then be utilized for on-line estimation of key process parameters and the estimated process parameters may be used for on-line control of the anaerobic digestion process. The so far limited success of using the concentration of (individual) VFAs or the alkalinity to control such processes is partly due to the large complexity and limited speed of accurate measurement methods for these parameters and the low accuracy of quick and simple measurement methods. VFA and alkalinity measurements according to the present invention, however, are very promising for on-line control of anaerobic digestion process since they are quite simple yet capable of a relatively high accuracy.

On-line feed-control strategies may also benefit from on-line measurements of the feed quality, *e.g.*, organic dry matter and biochemical methane potential, and of the properties of the digested sludge, *e.g.*, the remaining organic dry matter. This is another area where measurements according to the present invention are promising. Although these measurements mainly provide information about dissolved constituents, complementary information may be obtained from parallel measurements of, *e.g.*, turbidity or total suspended solids.

In certain cases, it may be beneficial to control anaerobic digestion processes using the raw measurement signals as input to multivariate statistical process control algorithms instead of using estimated key parameters. This may be performed in order to improve the stability and/or efficiency of the anaerobic digestion processes, *e.g.*, by controlling the hydraulic retention time or the addition of specific organic materials that are known to exert a direct influence on specific process parameters during fermentation. Also in these cases, it may be advantageous to complement the measured pulse voltammetry data with parallel data from other measurements such as pH, turbidity or total solids.

Thus, while there have been shown and described and pointed out fundamental novel features of the invention as applied to preferred embodiments thereof, it will be understood that various omissions and substitutions and changes in the form and details of the devices, method steps and products illustrated may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

### LIST OF REFERENCES

Ahring, B.K., Sandberg, M., Angelidaki, I., 1995. Volatile fatty acids as indicators of process imbalance in anaerobic digesters. Applied Microbiology Biotechnology 43 (3), 559-565.

Almeida, C.M.N.V., Lapa, R.A.S., Lima, J.L.F.C., 2001. Automatic flow titrator based on a multicommutated unsegmented flow system for alkalinity monitoring in wastewaters. Analytica Chimica Acta 438 (1-2), 291-298.

Ballesteros, E., Gallego, M., Valcarcel, M., 1993. Automatic method for on-line preparation of fatty acid methyl esters from olive oil and other types of oil prior to their GC determination. Analytica Chimica Acta 282, 581-588.

Boe, K., Styer J.P., Angelidaki, I., 2007. Monitoring and control of the biogas process based on propionate concentration using online VFA measurement. 11th IWA World Congress on Anaerobic Digestion, Presented in Session PP9A - Instrumentation and control, Australia.

Börjesson, P., Berglund, M., 2007. Environmental systems analysis of biogas systems-Part II: The environmental impact of replacing various reference systems. Biomass and Bioenergy 31, 326-344.

Diamantis, V., Melidis, P., Aivasidis, A., 2006. Continuous determination of volatile products in anaerobic fermenters by on-line capillary gas chromatography. Analytica Chimica Acta 573-574, 189-194.

Feitkenhauer, H., von Sachs, J., Meyer, U., 2002. On-line titration of volatile fatty acids for the process control of anaerobic digestion plants. Water Research 36, 212-218.

Grutz, P.W.E., 1967. Volatile fatty acid determination by automatic analysis. Water Research 1, 319.

Gujer, W., Zehnder, A.J.B., 1983. Conversion processes in anaerobic digestion. Water Science Technology 15, 127-67.

Hawkes, E.R., Guwy, A.J., Rozzi, A.G., Hawkes, D.L., 1993. A new instrument for on-line measurement of bicarbonate alkalinity. Water Research 27 (1), 167-170.

Jantsch, T.G., Mattiasson, B., 2004. An automated spectrophotometric system for monitoring buffer capacity in anaerobic digestion processes. Water Research 38, 3645-3650.

Kujawski, O., Wiese, J., König, R., Häck, M., 2007. Instrumentation, Control and Automation for Agricultural and Co-Digestion Biogas Plants - Yesterday, Today and Tomorrow. 11 th IWA World Congress on Anaerobic Digestion, Presented in Session PP9A - Instrumentation and control, Australia.

Liu, Y.C., Wang, F.S., Lee, W.C., 2001. On-line monitoring and controlling system for fermentation processes. Biochemical Engineering Journal 7, 17-25.

Pind, P.F., Angelidaki, I., Ahring, B.K., 2003. Dynamics of the anaerobic process: effects of volatile fatty acids. Biotechnology & Bioengineering 82(7), 791-801.

Powell, G.E., Archer, D.B., 1989. On-line titration method for monitoring buffer capacity and total volatile fatty acid levels in anaerobic digesters. Biotechnology & Bioengineering 33, 570-577.

Rozzi, A., DiPinto, A.C., 1994. Start-up and operation of anaerobic digesters with automatic bicarbonate control. Bioresearch Technology 48, 215-219.

Schink, B., 1988. Principles and limits of anaerobic degradation: environmental and technological aspects. In: Zehnder, A.J.B., editor. Biology of anaerobic microorganisms. New York: Wiley, 771-846.

Winquist, F., Krantz-Rulcker, C., Wide, P., Lundstrom, I., 1998. Monitoring of freshness of milk by an electronic tongue on the basis of voltammetry. Measurement Science and Technology 9, 1937-1946.

## Claims

1. A sensor device (1) for monitoring an anaerobic digestion process in an electrically conductive liquid comprising organic material, said sensor device (1) comprising:
- a probe (2) comprising at least one working electrode (3) and an auxiliary electrode (4); and
- a control unit (6);
said control unit (6) being arranged to apply a series of voltage pulses between said at least one working electrode (3) and said auxiliary electrode (4), each of said electrodes (3, 4) having an operative end surface (5) being adapted to be arranged in contact with said liquid so as to form an electric circuit, and said control unit (6) further being arranged to record a response signal corresponding to an electric current generated in said electric circuit in response to an applied voltage pulse,
**characterized in, that**
said sensor device (1) further comprises an abrasive device (9) having at least one abrading surface (10), said abrasive device (9) being movable in a predetermined pattern in relation to said operative end surface (5) of said electrodes (3, 4) and being arranged in relation to said electrodes (3, 4) such that said operative end surface (5) of each electrode (3, 4) is contacted by at least one of said abrading surfaces (10) during movement of said abrasive device (9) in said predetermined pattern so as to abrade contaminants bound thereon, and said abrasive device (9) being mounted on a mounting means (11) via which said abrasive device (9) is connectable to a drive unit (12) for driving the movement of said abrasive device (9).

2. The sensor device (1) according to claim 1, **characterized in,**
**that** said abrasive device (9) is arranged to be continuously or intermittently moved in said predetermined pattern such that abrasion of contaminants bound to said operative end surface (5) of said electrodes (3, 4) is achieved.

3. The sensor device (1) according to claim 1 or 2, **characterized in,**
**that** said electrodes (3, 4) are annular electrodes being embedded in a cylindrical support structure (13) of an electrically insulating material, each annular electrode (3, 4) having a non-embedded annular end surface forming said operative end surface (5), said annular electrodes (3, 4) having different diameters and being arranged concentric, and
**that** said mounting means (11) passes through said cylindrical support structure (13) in a gas tight feed-through (14) for connection of said abrasive device (9) to said drive unit (12), said gas tight feed-through (14) being arranged parallel to the longitudinal extension of said cylindrical support structure (13).

4. The sensor device (1) according to claim 1 or 2, **characterized in,**
**that** each working electrode (3) is a metal wire being embedded in a rod-shaped support structure (13), each metal wire having a non-embedded end surface forming said operative end surface (5), and
**that** said auxiliary electrode (4) is an annular electrode being arranged around the periphery of said rod-shaped support structure (13), and
**that** said mounting means (11) passes through said rod-shaped support structure (13) in a gas tight feed-through (14) for connection of said abrasive device (9) to said drive unit (12), said gas tight feed-through (14) being arranged parallel to the longitudinal extension of said rod-shaped support structure (13).

5. The sensor device (1) according to any one of claims 1-4, **characterized in, that** said mounting means (11) is a rotating axis, whereby said abrasive device (9) is movable through rotation in relation to said operative end surface (5) of said electrodes (3, 4) and is arranged in relation to said electrodes (3, 4) such that said operative end surface (5) of each electrode (3, 4) is contacted by at least one of said at least one abrading surfaces (10) during rotation of said abrasive device (9) so as to abrade contaminants bound thereon.

6. The sensor device (1) according to any one of the preceding claims, **characterized in, that** each abrading surface (10) is a grinding stone surface.

7. The sensor device (1) according to any one of the preceding claims, **characterized in, that** said electrodes (3, 4) have essentially the same hardness.

8. The sensor device (1) according to claim 7, **characterized in, that** said sensor device (1) comprises only one working electrode (3), whereby said working electrode (3) is made of an alloy of platinum and iridium and said auxiliary electrode (3) is made of stainless steel.

9. The sensor device (1) according to claim 7, **characterized in, that** said sensor device (1) comprises two working electrodes (3), whereby one working electrode (3) is made of an alloy of platinum and iridium, one working electrode (3) is made of gold and said auxiliary electrode (4) is made of stainless steel.

10. The sensor device (1) according to any one of the preceding claims, **characterized in, that** said sensor device (1) further comprises said drive unit (12), whereby said drive unit (12) is adapted to be arranged outside said probe (2).

11. The sensor device (1) according to any one of claims 1-9, **characterized in, that** said sensor device (1) further comprises said drive unit (12), whereby said probe (2) comprises a gas tight probe housing (16), whereby said support structure (13) with said electrodes (3, 4) is arranged gas tight in an aperture (17) of said probe housing (16) such that said operative end surface (5) of said electrodes (3, 4) is adapted to be arranged in contact with said liquid and said drive unit (12) is arranged within said probe housing (16).

12. A system (20) for monitoring an anaerobic digestion process in an electrically conductive liquid comprising organic material, **characterized in, that** said system comprises:
- a sensor device (1) according to any of claims 1-11;
- a memory for storing at least some recorded electric current values in a data matrix;
- a processing device for performing a multivariate data analysis of said stored electric current values; and
- optionally, a display device for displaying the result of said multivariate data analysis.

13. A method for monitoring an anaerobic digestion process in an electrically conductive liquid comprising organic material, said method comprising the steps of:
- applying a series of voltage pulses by means of a control unit (6) between at least one working electrode (3) and an auxiliary electrode (4), each electrode (3, 4) having an operative end surface (5) which is arranged in contact with said liquid so as to form an electric circuit; and
- recording a response signal corresponding to an electric current generated in said electric circuit in response to an applied series of voltage pulses, said response signal being recorded by means of said control unit (6);
**characterized in, that**
contaminants bound to said operative end surface (5) of said electrodes (3, 4) are abraded, said abrading being performed by means of an abrasive device (9) having at least one abrading surface (10), said abrasive device (9) being movable in a predetermined pattern in relation to said operative end surface (5) of said electrodes (3, 4) and being arranged in relation to said electrodes (3, 4) such that said operative end surface (5) of each electrode (3, 4) is contacted by at least one of said abrading surfaces (10) during movement of said abrasive device (9) in said predetermined pattern so as to abrade contaminants bound thereon.

14. The method according to claim 13, **characterized in, that** said method further comprises the steps of:
- storing at least some recorded electric current values in a memory; and
- performing a multivariate data analysis of said stored electric current values by means of a processing device.

## Patentansprüche

1. Sensorvorrichtung (1) zum Überwachen eines anaeroben Ausfäulungsprozesses in einer elektrisch leitenden Flüssigkeit, die organisches Material umfasst, wobei die Sensorvorrichtung (1) umfasst:
- einen Messfühler (2), der mindestens eine Arbeitselektrode (3) und eine Hilfselektrode (4) umfasst; und
- eine Steuereinheit (6);
wobei die Steuereinheit (6) angeordnet ist, um eine Serie von Spannungspulsen zwischen der mindestens einen Arbeitselektrode (3) und der Hilfselektrode (4) anzuwenden, wobei jede der Elektroden (3, 4) eine operative Endoberfläche (5) hat, welche eingerichtet ist, um in Berührung mit der Flüssigkeit angeordnet zu werden, um derart einen elektrischen Schaltkreis auszubilden, und wobei die Steuereinheit (6) weiterhin angeordnet ist, um ein abhängiges Signal aufzuzeichnen, welches einem elektrischen Strom entspricht, der in dem elektrischen Schaltkreis abhängig von einem angewendeten Spannungspuls erzeugt wird,
**dadurch gekennzeichnet, dass**
die Sensorvorrichtung (1) weiterhin eine Schleifvorrichtung (9) umfasst, welche mindestens eine Schleifoberfläche (10) hat, wobei die Schleifvorrichtung (9) in einem vorbestimmten Muster in Bezug auf die operative Endoberfläche (5) der Elektroden (3, 4) bewegbar ist und derart in Bezug auf die Elektroden (3, 4) angeordnet ist, dass die operative Endoberfläche (5) jeder Elektrode (3, 4) von mindestens einer der Schleifoberflächen (10) während Bewegung der Schleifvorrichtung (9) in dem vorbestimmten Muster berührt wird, um derart darauf gebundene Verunreinigungen abzuschleifen, wobei die Schleifvorrichtung (9) auf einem Befestigungsmittel (11) befestigt ist, mittels welchem die Schleifvorrichtung (9) mit einer Antriebseinheit (12) zum Antreiben der Bewegung der Schleifvorrichtung (9) verbunden werden kann.

2. Sensorvorrichtung (1) nach Anspruch 1, **dadurch gekennzeichnet, dass** die Schleifvorrichtung (9) angeordnet ist, um kontinuierlich oder unterbrochen in dem vorbestimmten Muster bewegt zu werden, so dass Abschleifen von Verunreinigungen, die auf der operativen Endoberfläche (5) der Elektroden (3, 4) gebunden sind, erreicht wird.

3. Sensorvorrichtung (1) nach Anspruch 1 oder 2, **dadurch gekennzeichnet,**
**dass** die Elektroden (3, 4) ringförmige Elektroden sind, welche in eine zylindrische Stützstruktur (13) eines elektrisch isolierenden Materials eingebettet sind, wobei jede ringförmige Elektrode (3, 4) nicht eingebettete ringförmige Endoberflächen hat, welche die operative Endoberfläche (5) ausbilden, wobei die ringförmigen Elektroden (3, 4) unterschiedliche Durchmesser haben und konzentrisch angeordnet sind, und dass das Befestigungsmittel (11) durch die zylindrische Stützstruktur (13) in einer gasdichten Durchführung (14) zur Verbindung der Schleifvorrichtung (9) mit der Antriebseinheit (12) hindurchführt, wobei die gasdichte Durchführung (14) parallel zu der Längsausdehnung der zylindrischen Stützstruktur (13) angeordnet ist.

4. Sensorvorrichtung (1) nach Anspruch 1 oder 2, **dadurch gekennzeichnet,**
**dass** jede Arbeitselektrode (3) ein in einer stabförmigen Stützstruktur (13) eingebetteter Metalldraht ist, wobei jeder Metalldraht eine nicht eingebettete Endoberfläche hat, welche die operative Endoberfläche (5) ausbildet, und
**dass** die Hilfselektrode (4) eine um den Umfang der stabförmigen Stützstruktur (13) herum angeordnete ringförmige Elektrode ist, und
**dass** das Befestigungsmittel (11) durch die stabförmige Stützstruktur (13) in einer gasdichten Durchführung (14) zur Verbindung der Schleifvorrichtung (9) mit der Antriebseinheit (12) hindurchführt, wobei die gasdichte Durchführung (14) parallel zu der Längsausdehnung der stabförmigen Stützstruktur (13) angeordnet ist.

5. Sensorvorrichtung (1) nach einem der Ansprüche 1-4, **dadurch gekennzeichnet, dass** das Befestigungsmittel (11) eine rotierende Achse ist, wobei die Schleifvorrichtung (9) durch Rotation in Bezug auf die operative Endoberfläche (5) der Elektroden (3, 4) bewegbar ist und in Bezug auf Elektroden (3, 4) derart angeordnet ist, dass die operative Endoberfläche (5) jeder Elektrode (3, 4) von mindestens einer der mindestens einen Schleifoberfläche (10) während Rotation der Schleifvorrichtung (9) berührt wird, um derart darauf gebundene Verunreinigungen abzuschleifen.

6. Sensorvorrichtung (1) nach einem der voranstehenden Ansprüche, **dadurch gekennzeichnet, dass** jede Schleifoberfläche (10) eine Mahlsteinoberfläche ist.

7. Sensorvorrichtung (1) nach einem der voranstehenden Ansprüche, **dadurch gekennzeichnet, dass** die Elektroden (3, 4) im Wesentlichen gleiche Härte haben.

8. Sensorvorrichtung (1) nach Anspruch 7, **dadurch gekennzeichnet, dass** die Sensorvorrichtung (1) nur eine Arbeitelektrode (3) umfasst, wobei die Arbeitselektrode (3) aus einer Legierung aus Platin und Iridium gemacht ist und die Hilfselektrode (3) aus Edelstahl gemacht ist.

9. Sensorvorrichtung (1) nach Anspruch 7, **dadurch gekennzeichnet, dass** die Sensorvorrichtung (1) zwei Arbeitselektroden (3) umfasst, wobei eine Arbeitselektrode (3) aus einer Legierung aus Platin und Iridium gemacht ist, eine Arbeitselektrode (3) aus Gold gemacht ist und die Hilfselektrode (4) aus Edelstahl gemacht ist.

10. Sensorvorrichtung (1) nach einem der voranstehenden Ansprüche,
**dadurch gekennzeichnet, dass** die Sensorvorrichtung (1) weiterhin die Antriebseinheit (12) umfasst, wobei die Antriebseinheit (12) eingerichtet ist, um außerhalb des Messfühlers (2) angeordnet zu werden.

11. Sensorvorrichtung (1) nach einem der Ansprüche 1-9, **dadurch gekennzeichnet, dass** die Sensorvorrichtung (1) weiterhin die Antriebseinheit (12) umfasst, wobei der Messfühler (2) ein gasdichtes Messfühlergehäuse (16) umfasst, wobei die Stützstruktur (13) mit den Elektroden (3, 4) gasdicht in einer Öffnung (17) des Messfühlergehäuses (16) derart angeordnet ist, dass die operative Endoberfläche (5) der Elektroden (3, 4) eingerichtet ist, um in Berührung mit der Flüssigkeit angeordnet zu sein, und wobei die Antriebseinheit (12) innerhalb des Messfühlergehäuses (16) angeordnet ist.

12. System (20) zum Überwachen eines anaeroben Ausfäulungsprozesses in einer elektrisch leitenden Flüssigkeit, die organisches Material umfasst, **dadurch gekennzeichnet, dass** das System umfasst:
- eine Sensorvorrichtung (1) nach einem der Ansprüche 1-11;
- eine Speicher zum Sichern von mindestens einigen aufgezeichneten elektrischen Stromwerten in einer Datenmatrix;
- eine Prozessorvorrichtung zum Ausführen einer multivariaten Datenanalyse der gesicherten elektrischen Stromwerte; und
- optional, eine Bildschirmvorrichtung zum Wiedergeben des Ergebnisses der multivariaten Datenanalyse.

13. Verfahren zum Überwachen eines anaeroben Ausfäulungsprozesses in einer elektrisch leitenden Flüssigkeit, die organisches Material umfasst, wobei das Verfahren die Schritte umfasst:
- Anwenden einer Serie von Spannungspulsen mittels einer Steuereinheit (6) zwischen mindestens einer Arbeitselektrode (3) und einer Hilfselektrode (4), wobei jede Elektrode (3, 4) eine operative Endoberfläche (5) hat, welche in Berührung mit der Flüssigkeit derart angeordnet ist, dass sie einen elektrischen Schaltkreis ausbildet; und
- Aufzeichnen eines abhängigen Signals, welches einem elektrischen Strom entspricht, der in dem elektrischen Schaltkreis abhängig von einer angewendeten Serie von Spannungspulsen erzeugt wird, wobei das abhängige Signal mittels der Steuereinheit (6) aufgezeichnet wird; **dadurch gekennzeichnet, dass**
Verunreinigungen, welche an die operative Endoberfläche (5) der Elektroden (3, 4) gebunden sind, abgeschliffen werden, wobei das Abschleifen mittels einer Schleifvorrichtung (9) mit mindestens einer Schleifoberfläche (10) durchgeführt wird, wobei die Schleifvorrichtung (9) in einem vorbestimmten Muster in Bezug auf die operative Endoberfläche (5) der Elektroden (3, 4) bewegbar ist und in Bezug auf die Elektroden (3, 4) derart angeordnet ist, dass die operative Endoberfläche (5) jeder Elektrode (3, 4) von mindestens einer der Schleifoberflächen (10) während Bewegung der Schleifvorrichtung (9) in dem vorbestimmten Muster berührt wird, um derart darauf gebundene Verunreinigungen abzuschleifen.

14. Verfahren nach Anspruch 13, **dadurch gekennzeichnet, dass**
das Verfahren weiterhin die Schritte umfasst:
- Sichern mindestens einiger aufgezeichneter Stromwerte in einem Speicher; und
- Durchführen einer multivariaten Datenanalyse der gesicherten elektrischen Stromwerte mittels einer Prozessorvorrichtung.

## Revendications

1. Dispositif de détection (1) pour surveiller un processus de digestion anaérobie dans un liquide électriquement conducteur comprenant un matériau organique, ledit dispositif de détection (1) comprenant .
- une sonde (2) comprenant au moins une électrode de travail (3) et une électrode auxiliaire (4) ; et
- une unité de commande (6) ;
ladite unité de commande (6) étant conçue pour appliquer une série d'impulsions de tension entre ladite au moins une électrode de travail (3) et ladite électrode auxiliaire (4), chacune desdites électrodes (3, 4) ayant une surface d'extrémité fonctionnelle (5) qui est apte à être mise au contact dudit liquide afin de former un circuit électrique, et ladite unité de commande (6) étant en outre conçue pour enregistrer un signal de réponse correspondant à un courant électrique généré dans ledit circuit électrique en réponse à une impulsion de tension appliquée,
**caractérisé en ce que**
ledit dispositif de détection (1) comprend en outre un dispositif abrasif (9) ayant au moins une surface d'abrasion (10), ledit dispositif abrasif (9) étant mobile selon une configuration prédéterminée par rapport à ladite surface d'extrémité fonctionnelle (5) desdites électrodes (3, 4) et étant agencé par rapport auxdites électrodes (3, 4) de manière à ce qu'au moins l'une desdites surfaces d'abrasion (10) soit mise en contact avec ladite surface d'extrémité fonctionnelle (5) de chaque électrode (3, 4) pendant le mouvement dudit dispositif abrasif (9) selon ladite configuration prédéterminée afin d'éliminer par abrasion des contaminants qui y sont liés, et ledit dispositif abrasif (9) étant monté sur un moyen de montage (11) par l'intermédiaire dudit dispositif abrasif (9) et pouvant être raccordé à une unité d'entraînement (12) pour entraîner le mouvement dudit dispositif abrasif (9).

2. Dispositif de détection (1) selon la revendication 1, **caractérisé en ce que** ledit dispositif abrasif (9) est conçu pour être déplacé en continu ou par intermittence selon ladite configuration prédéterminée de manière à effectuer l'abrasion de contaminants liés à ladite surface d'extrémité fonctionnelle (5) desdites électrodes (3, 4).

3. Dispositif de détection (1) selon la revendication 1 ou 2, **caractérisé en ce que** lesdites électrodes (3, 4) sont des électrodes annulaires qui sont noyées dans une structure de support cylindrique (13) d'un matériau électriquement isolant, chaque électrode annulaire (3, 4) ayant une surface d'extrémité annulaire non noyée formant ladite surface d'extrémité fonctionnelle (5), lesdites électrodes annulaires (3, 4) ayant des diamètres différents et étant agencées de manière concentrique, et
**en ce que** ledit moyen de montage (11) passe à travers ladite structure de support cylindrique (13) dans une traversée étanche aux gaz (14) permettant de raccorder ledit dispositif abrasif (9) à ladite unité d'entraînement (12), ladite traversée étanche aux gaz (14) étant agencée parallèlement à l'extension longitudinale de ladite structure de support cylindrique (13).

4. Dispositif de détection (1) selon la revendication 1 ou 2, **caractérisé en ce** chaque électrode de travail (3) est un fil métallique qui est noyé dans une structure de support en forme de tige (13), chaque fil métallique ayant une surface d'extrémité non noyée formant ladite surface d'extrémité fonctionnelle (5), et
en ce que ladite électrode auxiliaire (4) est une électrode annulaire qui est agencée autour de la périphérie de ladite structure de support en forme de tige (13), et
en ce que ledit moyen de montage (11) passe à travers ladite structure de support cylindrique (13) dans une traversée étanche aux gaz (14) pour raccorder ledit dispositif abrasif (9) à ladite unité d'entraînement (12), ladite traversée étanche aux gaz (14) étant agencée parallèlement à l'extension longitudinale de ladite structure de support en forme de tige (13).

5. Dispositif de détection (1) selon l'une quelconque des revendications 1 à 4, **caractérisé en ce que** ledit moyen de montage (11) est un axe tournant, ledit dispositif abrasif (9) étant mobile en rotation par rapport à ladite surface d'extrémité fonctionnelle (5) desdites électrodes (3, 4) et étant agencé par rapport auxdites électrodes (3, 4) de manière à ce qu'au moins l'une desdites au moins une surface d'abrasion (10) soit mise en contact avec ladite surface d'extrémité fonctionnelle (5) de chaque électrode (3, 4) pendant la rotation dudit dispositif abrasif (9) de façon à éliminer par abrasion les contaminants qui y sont liés.

6. Dispositif de détection (1) selon l'une quelconque des revendications précédentes, **caractérisé en ce que** chaque surface d'abrasion (10) est une surface constituée d'une pierre d'affûtage.

7. Dispositif de détection (1) selon l'une quelconque des revendications précédentes, **caractérisé en ce que** lesdites électrodes (3, 4) ont pratiquement la même dureté.

8. Dispositif de détection (1) selon la revendication 7, **caractérisé en ce que** ledit dispositif de détection (1) ne comprend qu'une seule électrode de travail (3), ladite électrode de travail (3) étant constituée d'un alliage de platine et d'iridium et ladite électrode auxiliaire (3) étant constituée d'acier inoxydable.

9. Dispositif de détection (1) selon la revendication 7, **caractérisé en ce que** ledit dispositif de détection (1) comprend deux électrodes de travail (3), une électrode de travail (3) étant constituée d'un alliage de platine et d'iridium, une électrode de travail (3) étant constituée d'or et ladite électrode auxiliaire (4) étant constituée d'acier inoxydable.

10. Dispositif de détection (1) selon l'une quelconque des revendications précédentes, **caractérisé en ce que** ledit dispositif de détection (1) comprend en outre ladite unité d'entraînement (12), ladite unité d'entraînement (12) étant apte à être disposée à l'extérieur de ladite sonde (2).

11. Dispositif de détection (1) selon l'une quelconque des revendications 1 à 9, **caractérisé en ce que** ledit dispositif de détection (1) comprend en outre ladite unité d'entraînement (12), ladite sonde (2) comprenant un logement de sonde étanche aux gaz (16), ladite structure de support (13) munie desdites électrodes (3, 4) étant disposée de manière étanche aux gaz dans une ouverture (17) dudit logement de sonde (16) de manière à ce que ladite surface d'extrémité fonctionnelle (5) desdites électrodes (3, 4) soit apte à être mise en contact avec ledit liquide et ladite unité d'entraînement (12) étant disposée à l'intérieur dudit logement de sonde (16).

12. Système (20) destiné à surveiller un processus de digestion anaérobie dans un liquide électriquement conducteur comprenant un matériau organique, **caractérisé en ce que** ledit système comprend :
- un dispositif de détection (1) selon l'une quelconque des revendications 1 à 11 ;
- une mémoire pour stocker au moins certaines valeurs enregistrées du courant électrique dans une matrice de données ;
- un dispositif de traitement destiné à effectuer une analyse de données multivariée desdites valeurs de courant électrique stockées ; et
- facultativement, un dispositif d'affichage destiné à afficher le résultat de ladite analyse de données multivariée.

13. Procédé de surveillance d'un processus de digestion anaérobie dans un liquide électriquement conducteur comprenant un matériau organique, ledit procédé comprenant les étapes consistant à :
- appliquer une série d'impulsions de tension au moyen d'une unité de commande (6) entre au moins une électrode de travail (3) et une électrode auxiliaire (4), chaque électrode (3, 4) ayant une surface d'extrémité fonctionnelle (5) qui est mise en contact avec ledit liquide afin de former un circuit électrique ; et
- enregistrer un signal de réponse correspondant à un courant électrique généré dans ledit circuit électrique en réponse à une série appliquée d'impulsions de tension, ledit signal de réponse étant enregistré au moyen de ladite unité de commande (6) ;
**caractérisé en ce que**
les contaminants liés à ladite surface d'extrémité fonctionnelle (5) desdites électrodes (3, 4) sont éliminés par abrasion, ladite abrasion étant effectuée au moyen d'un dispositif abrasif (9) ayant au moins une surface d'abrasion (10), ledit dispositif abrasif (9) étant mobile selon une configuration prédéterminée par rapport à ladite surface d'extrémité fonctionnelle (5) desdites électrodes (3, 4) et étant agencé par rapport auxdites électrodes (3, 4) de manière à ce qu'au moins l'une desdites surfaces d'abrasion (10) soit mise en contact avec ladite surface d'extrémité fonctionnelle (5) de chaque électrode (3, 4) pendant le mouvement dudit dispositif abrasif (9) selon ladite configuration prédéterminée afin d'éliminer par abrasion des contaminants qui y sont liés.

14. Procédé selon la revendication 13, **caractérisé en ce que**
ledit procédé comprend en outre les étapes consistant à :
- stocker au moins certaines valeurs enregistrées du courant électrique dans une mémoire ; et
- effectuer une analyse de données multivariée desdites valeurs de courant électrique stockées au moyen d'un dispositif de traitement.
